(19) Europäisches Patentamt
European Patent Office
Office européen des brevets

(11) **EP 3 541 989 B1**

(12) **EUROPÄISCHE PATENTSCHRIFT**

(45) Veröffentlichungstag und Bekanntmachung des Hinweises auf die Patenterteilung:
**25.11.2020 Patentblatt 2020/48**

(51) Int Cl.:
*D21B 1/36* (2006.01)     *D21B 1/32* (2006.01)
*D21B 1/34* (2006.01)

(21) Anmeldenummer: **17825807.5**

(22) Anmeldetag: **15.12.2017**

(86) Internationale Anmeldenummer:
**PCT/EP2017/083129**

(87) Internationale Veröffentlichungsnummer:
**WO 2018/114711 (28.06.2018 Gazette 2018/26)**

(54) **VERFAHREN ZUM VEREINZELN VON FASERN**

METHOD FOR SEPARATING FIBERS

PROCÉDÉ DE SÉPARATION DE FIBRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2016 DE 102016125446**

(43) Veröffentlichungstag der Anmeldung:
**25.09.2019 Patentblatt 2019/39**

(73) Patentinhaber: **Repulping Technology GmbH & Co. KG**
**86576 Schiltberg (DE)**

(72) Erfinder:
• **WUCHERER, Stephan**
  **85290 Geisenfled (DE)**
• **ELSNER, Christian**
  **33442 Herzebrock (DE)**

(74) Vertreter: **Wittmann, Ernst-Ulrich**
**Withers & Rogers LLP**
**Kaulbachstrasse 114**
**80802 München (DE)**

(56) Entgegenhaltungen:
**WO-A1-99/39043          WO-A1-2009/149958**
**DE-A1-102011 083 667**

**Beschreibung**

Die vorliegende Erfindung betrifft ein Verfahren zum Vereinzeln von Fasern, insbesondere ein Verfahren zum Herauslösen von Fasern aus einem Faserverbund bzw. einem Faserverbundmaterial unter Verwendung von Kavitation. Das Verfahren gemäß der vorliegenden Erfindung ist im Bereich der Papierindustrie bzw. in der Recyclingindustrie einsetzbar, um z.B. die in den Verbundmaterialien von Papierprodukten enthaltenden Fasern (Rohstoffe) zurückzugewinnen und der Papierherstellung bzw. der Wiederverwertung zuführen zu können. Des Weiteren kann es für weitere Anwendungen zur Separierung von Fasern in unterschiedlichen Industrien zur Anwendung kommen.

Eine mehrfache Nutzung der Fasern von z.B. Altpapier schont die natürlichen Ressourcen und ist ein entscheidender Faktor für den Umweltschutz, und spart zudem im Vergleich zur Herstellung von Primärfaserpapier im Herstellungsprozess zusätzlich Energie, Wasser und erzeugt weniger schädliche Emissionen und Abfall.

Verfahren zum Recyclen, insbesondere Verfahren zum Vereinzeln von Fasern, sind im Stand der Technik bekannt. Die Anwendbarkeit dieser Verfahren hängt im Wesentlichen von der erzielten Faserqualität der recycelten Faser und dem Ressourceneinsatz, im speziellen dem Energieaufwand, zur Durchführung des Verfahrens ab.

Bei der Herstellung von Papierprodukten, zum Beispiel im Bereich von Verpackungsmaterialien, nimmt der prozentuale Anteil an Verbundmaterialien und beschichteten Papieren im Vergleich zum Altpapier zu. Bekannte Beispiele sind hierbei Verbundverpackungen wie Getränkekartons, die mindestens aus zwei Materialien bestehen, enthaltend Pappe als äußere Schicht der Verpackung und Aluminium- und/oder eine Kunststoffschicht als innere Schicht der Verpackung.

Diese zwei Materialien sind derart miteinander verbunden, dass eine Separation mit der bloßen Hand unmöglich ist.

Die Wiederverwertung von diesen Verpackungsmaterialien, aber auch anderen Papierprodukten mit zunehmend höherem Anteil an Verbundstoffen, ist durch das Heraustrennen bzw. das Vereinzeln der darin enthaltenen Fasern (Rohstoff), mit den im Stand der Technik bekannten Verfahren, nahezu unmöglich bzw. nur unter sehr hohem Energieaufwand möglich.

Typischerweise wird bei den im Stand der Technik bekannten Verfahren das Altpapier in einem Pulper mit Wasser benetzt und unter mechanischer Einwirkung eingeweicht, so dass die Fasern aufquellen und sich das an den Papierfasern enthaltene Material abtrennt. Die Pulper weisen zum Vermischen Rotoren auf, wodurch die innere Stoffreibung erhöht wird, was zu einer verbesserten Separation der Fasern führt.

DE 10 2011 083 667 A1 offenbart ein Verfahren zur Benetzung von Fasermaterial mittels einer Vorrichtung, welche zumindest ein Gehäuse, das zumindest eine Verschließbare Öffnung aufweist, sowie einen Rotor zur Durchmischung des Gehäuseinhalts umfasst.

WO 2009/149958 A1 offenbart eine Vorrichtung zur Befeuchtung von Fasermaterial im Wechseldruckverfahren mit einem luft- und dampfdichten Gehäuse, das eine Vakuumleitung sowie eine Belüftungsleitung aufweist, wobei in der Vakuumleitung bzw. in der Belüftungsleitung ein Wegeventil vorgesehen ist.

Die im Stand der Technik bekannten Verfahren weisen hierbei den Nachteil auf, dass für die Separation der Faserverbunde bzw. der Faserverbundmaterialien eine zu lange Behandlungsdauer für das Einweichen und das Aufquellen notwendig ist. Dies führt dazu, dass die von dem Altpapier und somit von der Faser abgetrennten Rejecte, wie z.B. Kunststoff, Aluminium-Folien, Wachse, unnötigerweise weiter zerkleinert werden, und nur durch zusätzliche Prozessschritte und unter hohem Aufwand nur schwer von der eigentlichen recycelten Faser getrennt werden können. Die Menge der verwertbaren Fasern fällt diesbezüglich signifikant mit der Länge der Behandlungsdauer des Faserverbundes und der Faserverbundmaterialien. Zudem können die Fasern durch die innere Stoffreibung derart zerkleinert und/oder beschädigt werden, was die Ausbeute und Qualität an wiederverwertbaren Fasern reduziert.

Des Weiteren wirkt sich auch eine zu lange Behandlungsdauer negativ auf die Fasern selbst und die damit einhergehende Beschaffenheit und auf die Festigkeitseigenschaften der Fasern aus. Lange Fasern neigen während einer zu langen Behandlungsdauer zum Brechen, was demzufolge zu einer reduzierten Faserqualität führt. Zudem werden die Fasern durch die im Stand der Technik üblicherweise angewandten Verfahren in ihrer Form, Teilchengröße und Länge wesentlich verändert, was zu einer reduzierten Faserqualität und dementsprechend zu einer geringeren Ausbeute wiederverwertbarer Fasern führt.

Um einer Reduzierung der Faserqualität und dem Verlust an wiederverwertbaren Fasern durch eine zu lange Behandlungsdauer entgegenzuwirken, wird in den Verfahren nach dem Stand der Technik das Faserverbundmaterial für nur sehr kurze Zeit im Pulper aufbereitet. Diese Verfahren weisen den Nachteil auf, dass durch die kurze Behandlungsdauer ein hoher Anteil der Faserverbünde oder des Faserverbundmaterials nicht aufgetrennt wird und mit den Rejecten der weiteren Verwertung/Trennung in nachgeschalteten Sortier- und Reinigungsanlagen zugeführt werden muß. Dies führt zu einem Verlust an hochwertigen Fasern und zu einer Erhöhung der Betriebskosten für die Aufbereitung/Trennung bzw. die Entsorgung der Rejecte.

Vor diesem Hintergrund ist es Aufgabe der Erfindung, die Nachteile des Standes der Technik wenigstens teilweise zu überwinden. Diese Aufgabe wird durch ein Verfahren gemäß Anspruch 1 gelöst. Bevorzugte Ausgestaltungen der Erfindung sind Gegenstand der Unteransprüche.

Demnach betrifft die Erfindung ein Verfahren zum Vereinzeln von Fasern, insbesondere ein Verfahren zum Herauslösen von Fasern aus einem Faserverbund bzw. einem Faserverbundmaterial mittels Kavitation unter Verwendung wenigstens eines Behälters mit einem vorbestimmten Aufnahmevolumen sowie wenigstens einer Vakuumpumpe, welche über eine Vakuumleitung und ein Ventil mit dem Behältervolumen verbunden ist. Hierbei ist unter Fasern ein feines oder dünnes fadenähnliches Gebilde zu verstehen, welches durch chemische und/oder mechanische Verfahren aus einem pflanzlichen oder tierischen Rohstoff besteht oder auch synthetisch erzeugt werden kann. Diese Fasern, insbesondere Papier-/ Cellulosefasern, stellen den Rohstoff für die Papierherstellung dar und sind gerade in den zu recycelnden Materialien in Faserverbunden oder Faserverbundmaterialien mit anderen Materialien verbunden. Faserverbunde oder Faserverbundmaterialien stellen eine feste Verbindung zwischen unterschiedlichen Materialien dar. Hierbei werden Papier-/ Cellulosefasern als ein Teil eines Verbundes mit weiteren Materialien, z.B. einer Aluminiumbeschichtung, derart kombiniert, dass diese nahezu zu einer Einheit verschmelzen. Durch das erfinderische Verfahren wird diese/r Einheit/Verbund durch Kavitation aufgetrennt und sowohl die Papier-/ Cellulosefasern als auch die weiteren Verbundmaterialien liegen separat vor. Unter Kavitation ist ein auf Gasblasenzerfall-Geschwindigkeit beruhendes Verfahren zu verstehen, bei dem Gasblasen in Flüssigkeiten bei Erzeugung einer Druckänderung, insbesondere beim Erzeugen eines Vakuums, in ihrem Volumen vergrößert werden und bei einem explosionsartigen Druckausgleich implodieren. Durch das Implodieren der Gasblasen wird das vergrößerte Volumen der Gasblasen mit der Flüssigkeit geflutet, wodurch eine kinetische Energie auf den Faserverbund bzw. auf die Faserverbundmaterialien wirkt, und diese voneinander trennt. Unter explosionsartigem Druckausgleich ist ein zügiger Ausgleich der Drücke zwischen dem Behälterinnendruck und dem Druck außerhalb des Behälters innerhalb eines Bereiches von 0,001s bis 1s zu verstehen.

Das erfindungsgemäße Verfahren zeichnet sich insbesondere durch ein Kavitationsverfahren aus, mit welchem vorzugsweise Faser / Faserbindungen und Faser / nicht Faserbindungen, d.h. Beschichtungen jeglicher Art, voneinander getrennt bzw. separiert werden. Hierbei werden speziell die nicht faserhaltigen Verbindungen auf Fasern (z.B. PE Folie, Alufolie, Barrierebeschichtungen, etc.) nahezu faserfrei und großflächig voneinander getrennt, d.h. Restanhaftungen eines Restfaseranteils an diesen Materialien aus einem ursprünglichen Faserverbund werden wenigstens reduziert bzw. ganz vermieden. Des Weiteren werden Faseragglomerate bzw. klassische Faser / Faser-Verbindungen in Einzelfasern zerlegt. Diese Zerlegung erfolgt auch bei speziellen Faserverbindungen, die zum Beispiel mit speziellen Mitteln (Nassverfestiger, Harz, etc.) behandelt bzw. getränkt wurden und welche im Stand der Technik als nicht - oder nur mittels sehr hohem Energieaufwand als trennbar galten.

Das erfindungsgemäße Verfahren ist insbesondere darauf ausgelegt, Verbundmaterialien die mit einem Faserflies verklebt, beschichtet (extrudiert) worden sind, nahezu faserfrei und vor allem großflächig voneinander zu separieren (trennen). Dies geschieht durch dieses Verfahren in einer schonenden Art und Weise, ohne die dabei abgelösten Verbundmaterialien, wie aus bisherigen Prozessen bereits bekannt, unnötig zu zerkleinern. Diese Eigenschaft kommt einer nachgeschalteten Sortierung/Trennung von unterschiedlichen Materialien zu Gute, um die jeweils dabei entstehenden unterschiedlichen Fraktionen einem jeweils eigenen Wiederverwertungskreislauf zuzuführen, und dient somit in erheblichem Maße der Ressourcen-und Energieeffizienz.

Weiterhin können mit dem erfindungsgemäßen Verfahren Faserverbindungen gelöst werden, die auf Grund ihrer veränderten Eigenschaften (spezielle Vorbehandlung, z.B. Hydrophobierung) oder auf sehr "krafthaltigen" Faserverbänden beruhen, und dem Wiederverwertungsprozess zugeführt werden. Dies ist im Stand der Technik entweder nur mit einem hohen Energieaufwand oder größtenteils für zum Beispiel nassfeste behandelte Faser- oder Papierarten nicht möglich.

Das Verfahren zum Herauslösen von Fasern aus einem Verbund wird vorteilhafterweise in einem gasdicht verschließbaren Behälter, einem sogenannten Kavitationsstofflöser durchgeführt. Der Behälter (Kavitationsstofflöser) ist in der Materialauswahl, Wandstärke und Versteifung derart ausreichend dimensioniert, so dass dieser bei der Ausführung des Verfahrens mit den einzelnen Faserablösezyklen unter verschiedenen Drücken durch die Evakuierung (Expansion) bzw. unter explosionsartigem Druckausgleich (Implosion) keinen Schaden nimmt. Die zur Erzeugung der Kavität notwendigen Drücke werden überwenigstens eine konventionelle im Stand derTechnik bekannte Vakuumpumpe bereitgestellt. Die außerhalb des Behälters installierte Vakuumpumpe ist über wenigstens eine Vakuumleitung direkt mit dem Behälter verbunden. Für das Erzeugen eines Vakuums und somit eines Unterdruckes ist vorteilhafterweise kein zusätzlicher Druckbehälter notwendig. Dies vereinfacht den strukturellen Aufbau und verringert das Volumen der Gesamtanlage und führt zu Kosteneinsparungen. Die wenigstens eine Vakuumleitung weist wenigstens ein Ventil zum Schließen und Öffnen der Vakuumleitung auf. Das Ventil der Vakuumleitung wird pneumatisch angesteuert. Vorteilhafterweise kann durch die pneumatische Ansteuerung des Ventiles der Vakuumleitung ein zielgerichteter und ein zeitlich koordinierter Ablauf zum Erzeugen des Vakuums erreicht werden. Weitere Möglichkeiten der Ansteuerung, wie z.B. eine elektro-pneumatische Ansteuerung der Ventile, sind hierdurch nicht ausgeschlossen.

Weiterhin wird wenigstens eine Belüftungsleitung mit einer vorbestimmten Querschnittsöffnung mit wenigstens einem Ventil verwendet. Das Ventil der Belüftungsleitung weist einen geschlossenen und einen offenen Zustand auf, wobei im offenen Zustand Luft durch das Ventil passieren kann und im geschlossenen Zustand das Ventil derart geschlossen ist, dass keine Luft das Ventil passiert. Das Ventil der Belüftungsleitung kann in einem Zeitbereich von 19ms (Millisekunden) bis 41ms von dem geschlossenen Zustand in den offenen Zustand geschaltet werden. Das Ventil ist hierbei in dem Schaltzustand geschaltet, bei welchem Luft das Ventil passieren kann. Weiterhin kann das Ventil der Belüftungsleitung in einem Zeitbereich von 20ms bis 45ms von dem offenen Zustand in den geschlossenen Zustand geschaltet werden. Das Ventil ist hierbei in dem Schaltzustand geschaltet, bei welchem das Ventil für Luft nicht passierbar ist. Das Ventil wird vorzugsweise pneumatisch angesteuert. Vorteilhafterweise kann durch die pneumatische Ansteuerung der Ventile ein zielgerichteter und ein zeitlich koordinierter Ablauf zum Erzeugen des Vakuums erreicht werden. Weitere Möglichkeiten der Ansteuerung, wie z.B. eine elektro-pneumatische Ansteuerung der Ventile, sind hierdurch nicht ausgeschlossen.

Die verwendeten Ventile (schnelle Klappen) in den Belüftungsleitungen sind modifizierte im Stand der Technik bekannte Ventile zum Öffnen und Verschließen von Druck- bzw. Luftleitungen. Die im Stand der Technik bekannten Ventile weisen den Nachteil auf, dass diese nicht die zügigen Öffnungsgeschwindigkeiten erreichen, um die für das erfinderische Verfahren notwendige Kavitation bereitzustellen. Erst durch die hohen Öffnungsgeschwindigkeiten wird sichergestellt, dass der Druck im zu evakuierenden Behälterinnenraum zügig auf den Druck außerhalb des Behälters ausgeglichen wird. Die modifizierten Ventile weisen eine Luftkammer, einen Ventileingang, sowie einen Ventilausgang, jeweils verbunden mit innenliegenden Führungsrohren, auf. Weiterhin weist das Ventil eine innere Zylinderkammer auf, in welche die Luft vom Ventileingang eingeleitet wird. In der inneren Zylinderkammer ist ein Kolben drehbeweglich gelagert eingebracht, welcher in Kontakt mit den zwei Führungsrohren steht. Der Ventileingang und der Ventilausgang weisen einen Durchmesser im Bereich von wenigstens 1/4" Zoll (6,35 mm) bis 3/4" Zoll (19,05mm), vorzugsweise im Bereich von 1/2" Zoll (12,7 mm) bis 3/4" Zoll (19,05 mm), besonders bevorzugt von 3/4" Zoll (19,05 mm) auf. Durch die modifizierte Ausbildung des Ventileingangs bzw. des Ventilausgangs, verglichen mit den im Stand der Technik bekannten Ventilen, welche einen Ventileingang von ¼" Zoll oder kleiner aufweisen, wird der Kolben deutlich schneller bewegt, was ein schnelleres Durchschalten der Luft ermöglicht. Weiterhin wurden die Zylinderkammer in ihrem Volumen und das Luftauslassloch modifiziert, was vorteilhafterweise einen verbesserten Luftaustritt aus dem Ventil gewährleistet.

Das erfindungsgemäße Verfahren weist wenigstens die Schritte i) bis iv) auf, welche im Folgenden beschrieben werden. Zudem weist Schritt iv) wenigstens zwei weitere Unterschritte v) und vi) auf.

i) Der Behälter (Kavitationsstofflöser) wird mit einer vorbestimmten Menge an Wasser und wenigstens einem Faserverbund bzw. Faserverbundmaterial befüllt. Alternativ kann der Behälter bereits mit einem Faserverbund-Wasser-Gemisch befülltwerden, was bereits in einem Prozessschritt zuvor und in einem anderen Behälter aus einem Faserverbund bzw. einem Faserverbundmaterial mit Wasser erzeugt wurde. Für die Befüllung, zur Belüftung und Entlüftung, sowie zur Entleerung des Behälters, ist dieser mit vorzugsweise fünf gasdicht verschließbaren Öffnungen versehen. Diese bestehen aus einem Befülldeckel mit vollständig umlaufender Gummidichtung zum Befüllen mit den Faserverbünden oder Faserverbundmaterialien, und einer Ableeröffnung zur Entnahme der wiederverwertbaren Fasern sowie zum Abscheiden der Rejecte. Weiterhin weist der Behälter eine Verdünnungsleitung für die Zufuhr von Wasser und wenigstens eine Vakuumleitung mit Ventil auf. Die Vakuumleitung ist mit wenigstens einer Vakuumpumpe verbunden, um einen Behälterinnendruck verschieden von dem Druck außerhalb des Behälters (Behälterumgebungsdruck) aufzubauen. Zudem weist der Behälter wenigstens eine Belüftungsleitung mit wenigstens einem Ventil (schnelle Klappen) auf, wodurch mit dem Öffnen des Ventils in der Belüftungsleitung ein Druckausgleich zwischen dem Behälterinnendruck und dem Behälterumgebungsdruck durchgeführt wird. Durch das schnelle Öffnen und Schließen wenigstens eines Ventils in wenigstens einer Belüftungsleitung erfolgt der explosionsartige Druckausgleich und bei gleichzeitiger Bereitstellung eines Vakuums mittels der Vakuumpumpe wird zwischen dem Faserverbund bzw. dem Faserverbundmaterial Kavitation erzeugt. Der Befülldeckel mit vollständig umlaufender Gummidichtung ist ein hydraulisch und/oder elektrisch angetriebener Deckel zum Verschließen der Befüllöffnung des Behälters. Der Bewegungsablauf des Deckels verläuft von einer offenen Position, welche nicht über der zu verschließenden Befüllöffnung liegt, in eine verschlossene Position, welche über der zu verschließenden Befüllöffnung liegt. Der Befülldeckel verfährt von der offenen Position in die verschlossene Position über an das Deckelgestell angebrachte Laufräder, welche in einer an dem Behälter angebrachten Geradführung laufen. Der Befülldeckel wird vor einer jeden Traversierung zu Beginn des Bewegungsablaufes einige wenige Millimeter gleichlaufend in senkrechter Richtung angehoben, um vorteilhafterweise die in der Unterseite des Befülldeckels eingebrachte, leicht hervorstehende- und umlaufende Gummidichtung nicht durch die Reibung des Verfahrens des Befülldeckels von der offenen in die geschlossene Position bzw. von der geschlossenen in die offene Position zu beschädigen. Unter Traversion ist der Bewegungsablauf des Deckels von der offenen in die geschlossene Position bzw. von der geschlossenen in die offene Position mit vorherigem bzw. anschließendem Anheben bzw. Absenken in senkrechter Richtung zu verstehen. Der Positionierungszustand des Deckels wird über eine Sensorik erfasst, welche aus einer Gruppe ausgewählt ist, umfassend elektrische, magnetische, mechanische, elektromechanische und/oder optische Sensoren. An der Vorderkante des Deckels ist eine Bürstenleiste verbaut, die während der Vor- bzw. Rückwärtsbewegung des Deckels Verunreinigungen, die sich auf dem oberen Rand der Deckelöffnung befinden, abstreift, um vorteilhafterweise eine vollständige Abdichtung des Behälters mittels des Befülldeckels zu gewährleisten. Unter Vorderkante des Deckels ist die Kante des Deckels zu verstehen, welche den geringsten Abstand zur Behälteröffnung beim Verfahren von der offenen Position in Richtung geschlossener Position aufweist.

ii) Nach dem Befüllen des Behälters mit Faserverbünden oder Faserverbundmaterialien, wird der Behälter derart gasdicht abgeschlossen, so dass keine Behälterumgebungsluft in den Behälter eindringen kann bzw. durch die wenigstens eine Vakuumpumpe ein Behälterinnendruck verschieden von dem Druck außerhalb des Behälters aufgebaut werden kann. Durch das gasdichte Abschließen der Befüllöffnung (Befülldeckel) des Behälters wird vorteilhafterweise das erst notwendige Vakuum (Unterdruck) erzielt, um durch den anschließend durchgeführten explosionsartigen Druckausgleich eine entsprechende Kavitation zu erzeugen.

iii) Nach dem gasdichten Abschließen des Behälters erfolgt ein Vermischen des Wassers mit dem Faserverbund bzw. dem Faserverbundmaterial unter Verwendung mechanischer Energie, insbesondere durch Rühren. Das Rühren erfolgt durch ein in dem Behälter installiertes Rührwerk. Vorteilhafterweise wird durch das stetige Rühren der Stoffsuspension mittels des Rührwerks die Flüssigkeitsverteilung und die Durchmischung der Stoffsuspension verbessert, wodurch der Effekt der Kavitation gesteigert wird. Das Verrühren erfolgt bei einer durchschnittlichen Rotordrehzahl gesteuert durch einen Frequenzumformer in einem Bereich von 1 1/min bis 1000 1/min, bevorzugt in einem Bereich von 1 1/min bis 500 1/min, besonders bevorzugt in einem Bereich von 200 1/min bis 500 1/min. Alternativ kann zur besseren Flüssigkeitsverteilung ein konventioneller Rotor in dem Behälter installiert werden, welcher über im Stand der Technik bekannte Antriebe, wie z.B. Asynchronmotoren mit Riemenscheibe und Riemen, oder mittels Getriebe oder mittels einem Direktantrieb mit Sollbruchstelle zur Rotorachse, angetrieben wird. Zur gasdichten Abdichtung des Rotors wird eine aus dem Stand der Technik bekannte Dichtung, z.B. eine Gleitringdichtung, eingesetzt.

iv) Durch das erfinderische Verfahren wird eine kinetische Energie in den Faserverbünden bzw. in den Faserverbundmaterialien durch zwei Unterschritte (v) und (vi) erzeugt. Die Unterschritte (v) und (vi) werden abhängig von der Art und Menge der zu verarbeitenden Faserverbünde bzw. Faserverbundmaterialien sowie für die von derfolgenden Wiederverwertung benötigte Faserqualität wenigstens einmal durchgeführt und können zur Steigerung sowohl der Faserausbeute als auch der Faserqualität wenigstens ein weiteres Mal und/oder weitere Male wiederholt werden.

v) In einem ersten Unterschritt (v) wird durch das Evakuieren der Luft aus dem Behälter über wenigstens eine Vakuumleitung mittels wenigstens einer Vakuumpumpe ein Behälterinnendruck verschieden von dem Druck außerhalb des Behälters aufgebaut. Der Behälterinnendruck wird auf höchstens -950 hPa abgesenkt. Durch den im Behälter erzeugten Unterdruck bzw. durch das Erzeugen des Vakuums werden die zwischen den einzelnen Fasern des im Wasser eingeweichten Faserverbundes bzw. der Faserverbundmaterialien vorhandenen Gasblasen in ihrem Volumen vergrößert. Durch ein Implodieren dieser Gasblasen kommt es im Inneren des Faserverbundes, zwischen den Fasern, sowie an den benachbarten Oberflächen kurzzeitig zu extremen Zuständen mit hohen Druckwerten und Temperaturen. Durch diese kurzzeitigen Extremzustände innerhalb der Faserverbünde werden selbst härtere Materialien angegriffen und erodieren.

vi) In dem zweiten Unterschritt (vi) wird ein Druckausgleich im Behälterinnenraum zur Erzeugung der zuvor genannten Kavitation in dem Faserverbund bzw. in den Faserverbundmaterialien erzeugt. Vorteilhafterweise wird durch den explosionsartig erfolgenden Druckausgleich mittels dem Öffnen wenigstens eines Ventils in wenigstens einer Belüftungsleitung eine Kavitation erzeugt. Durch die Kavitation bricht die Gasblase in sich zusammen (implodiert), wodurch das zuvor vergrößerte Volumen mit einer Flüssigkeit, vorzugsweise Wasser, geflutet wird. Die kinetische Energie dieser raumeinnehmenden Flüssigkeit mündet in einer zentral durch den vormals bestehenden Gasraum führenden Aufprallenergie in Form eines Flüssigkeitsdrucks. Die dabei entstehenden nadelförmigen Energiestöße bewirken ein "Absprengen" der Fasern und Rejecte von den Faserverbünden bzw. Faserverbundmaterialien und resultieren somit in einer Separierung des eingesetzten Materials. Der Vorgang des Öffnens des wenigstens einen Ventils in der Belüftungsleitung und der damit nahezu explosionsartig einhergehende Druckausgleich erfolgen in einem Zeitbereich von 0,001 s und 1 s. Durch das zügige Öffnen des Ventils werden das Kollabieren der Gasblase und das damit verbundene Auftreten der kinetischen Energie innerhalb des Faserverbundes zusätzlich verstärkt und die Ausbeute an wiederverwertbaren Fasern erhöht. Vorteilhafterweise wird durch die vermehrt zur Verfügung stehende kinetische Energie ein Separieren der Fasern und Rejecte vereinfacht und zusätzlich beschleunigt, wodurch die Behandlungsdauer der Faserverbünde bzw. Faserverbundmaterialien im Ganzen signifikant gesenkt wird und die Faserverbünde bzw. die Faserverbundmaterialien einer deutlich schonenderen Behandlung zur Separation unterzogen werden können. Dies führt sowohl zu einer verbesserten Ausbeute an wiederverwertbaren Fasern sowie zu einer Erhöhung der Qualität der wiederverwertbaren Fasern, als auch zu einer signifikanten Reduzierung des Energieverbrauches des erfinderischen Verfahrens durch die reduzierte Behandlungsdauer.

Insbesondere findet in einer weiteren Ausführungsform der Schritt (vi) bevorzugt innerhalb eines Zeitbereiches von 0,001s bis 0,1s, besonders bevorzugt innerhalb eines Zeitbereiches von 0,001s bis 0,01s statt.

In einer Ausführungsform der Erfindung ist das Ventil über die Vakuumleitung mit wenigstens einer Rückschlagklappe verbunden. Durch die Rückschlagklappe wird das Ventil und somit die Vakuumleitung in einer Richtung geschlossen und in der anderen Richtung dagegen vom Sog der Vakuumpumpe freigegeben. Beim Einschalten der Vakuumpumpe wird die abdichtende Klappe aus Ihrem Klappensitz abgehoben und die im Behälter vorhandenen Gase und/oder Luft werden durch die Sogwirkung der Vakuumpumpe abgepumpt. Beim Abschalten der Vakuumpumpe wird die abdichtende Klappe durch das Eigengewicht in ihren Klappensitz gedrückt und schließt somit luftdicht ab. Zwischen der Behälterumgebung und/oder der Vakuumleitung mit der Vakuumpumpe und dem Behälterinnenraum erfolgt diesbezüglich kein Luftaustausch mehr und das Vakuum innerhalb des Behälterinnenraums und der Druck bleiben stabil. Der hier beschriebene Aufbau der Rückschlagklappe stellt nur eine bespielhafte Beschreibung dar und ist nicht nur auf diese Technik begrenzt. Ebenfalls können Ventile mit Rückschlagelementen, enthaltend z.B. Kugeln, Kegel und Membranen, verwendet werden. Der Rückstellmechanismus bzw. das Betätigen des Schließelements kann auch mittels einer Feder durchgeführt werden.

Das Vorhandensein der Rückschlagklappe ermöglicht ein Konstanthalten des Behälterinnendrucks, insbesondere des Unterdrucks, wodurch anschließend mittels der in Schritt (vi) einströmenden Luft Kavitation zwischen den Fasern der Faserverbünde bzw. Faserverbundmaterialien aufgebaut wird. Durch die Rückschlagklappe wird ein Vakuumverlust über die Vakuumleitung bei länger andauerndem Vakuum im Behälter vermieden. Des Weiteren dient die Rückschlagklappe dem Schutz der Vakuumpumpe.

In einer weiteren Ausführungsform der Erfindung werden die Ventile in der Belüftungsleitung in einem Zeitbereich von 19ms bis 27ms, vorzugsweise in einem Zeitbereich von 19ms bis 24ms von dem geschlossen Zustand in den offenen Zustand geschaltet und/oder in einen Zeitbereich von 20ms bis 39ms, vorzugsweise in einem Zeitbereich von 20ms bis 33ms, besonders bevorzugt in einem Zeitbereich von 20ms bis 24ms von dem offenen Zustand in den geschlossenen Zustand geschaltet.

Die Erfindung betrifft ein Verfahren für die Verarbeitung wenigstens eines Faserverbundes, ausgewählt aus einer Gruppe von Fasersystemen, enthaltend Naturfasern, wie pflanzliche Fasern und/oder mineralische Fasern und/oder Chemiefasern, gebildet aus natürlichen Polymeren pflanzlicher oder tierischer Herkunft, natürlichen Polymeren und/oder synthetischen Polymeren und Folien aus natürlichen Polymeren und/oder synthetischen Polymeren und/oder Metall und Mischungen derselben.

Die Erfindung betrifft auch ein Verfahren bei dem neben dem Wasser und dem Faserverbund wenigstens ein weiteres Additiv zugegeben wird, welches aus einer Gruppe ausgewählt wird, welche Säuren, Laugen, Dispergiermittel, Benetzungsmittel und Kombinationen hiervon umfasst.

Weiterhin betrifft die Erfindung ein Verfahren bei dem der Faserverbund vor Eintrag in den Behälter zerkleinert wurde und vorzugsweise die Einzelteile des Faserverbundes eine durchschnittliche maximale Kantenfläche von weniger als 10000 mm$^2$, vorzugsweise von weniger als 100 mm$^2$ und besonders bevorzug von weniger als 25 mm$^2$ aufweisen. Vorteilhaft ist, dass hierbei ein verbessertes Eindringverhalten der Flüssigkeit in den Faserverbund erzielt wird, und dadurch mittels Kavitation und dem Gasblasenzerfall die eindringende Flüssigkeit die Fasern der Faserverbünde bzw. Faserverbundmaterialien besser separiert. Durch die Verringerung der Kantenfläche ergibt sich eine Erhöhung der Angriffsflächen und eine Verhinderung sich übereinanderlegender Teile, wodurch die Ausbeute und Faserqualität durch das erfinderische Verfahren verbessert werden.

Bei Einsatz des erfindungsgemäßen Verfahrens zur Aufbereitung von Faserstoffen werden die zum Einsatz kommenden Fasern weniger geschädigt. Die feine Verzweigung der Faserstruktur im besonderen an der Oberfläche der einzelnen Faser wird weniger geschädigt, als bei Verfahren des heutigen Standes der Technik, welche dem gleichen Zweck, nämlich dem Pumpfähigmachen des Faserstoffes und der Vereinzelung der Fasern, dienen.

Im Filtrat des mittels des beschrieben Verfahrens pumpfähig aufgelösten Faserstoffes ist der chemische Sauerstoffbedarf (CSB) zum Abbau der im Filtrat befindlichen Inhaltsstoffe gegenüber Stand-der-Technik-Auflösesystemen bei gleichem Auflösegrad und gleichem Einsatzmaterial um 2 bis 42% reduziert.

Der Entwässerungswiderstand nach Shopper-Riegler (°SR) reduziert sich durch die Verwendung des beschriebenen Verfahrens gegenüber Stand-der-Technik-Auflösesystemen bei gleichem Auflösegrad und gleichem Einsatzmaterial um 1 bis 8 Punkte.

Hierdurch wird unter anderem eine Steigerung der Ausbeute des eingesetzten Rohstoffes, eine Reduzierung des Entwässerungswiderstandes des so erzeugten Fasermaterials und damit eine Steigerung der Papiermaschinenproduktionsgeschwindigkeit erzielt. Darüber hinaus wird eine Reduzierung des Bedarfes an der Verbrauchsmenge Verkeimung-reduzierender Mittel (Biozide) und damit eine Entlastung der Umwelt erzielt. Auch die Entlastung der Abwasseraufbereitungsanlage durch geringere Fracht aus der Papierfabrik stellt einen weiteren Vorteil der vorliegenden Erfindung dar.

Insbesondere steigt die Kantenfläche der Einzelteile des Faserverbundes im Wesentlichen proportional zum Aufnahmevolumen des Behälters, was sich somit in einer zeitlich konstanten Verfahrensdauer niederschlägt. Eine konstante Kantenfläche der Einzelteile des Faserverbundes bei gleichzeitiger Erhöhung des Aufnahmevolumens des Behälters kann sich in einer Verlängerung des Verfahrens niederschlagen.

In einer Ausführungsform der Erfindung wird Schritt (iv) im einer vorbestimmten Anzahl von Durchläufen wiederholt. Durch ein Wiederholen des Schritts (iv) wird durch die schonende Behandlung eine Steigerung der Faserausbeute bei erhöhter Faserqualität erzielt. Hierzu verläuft der erste Durchlauf des Schritts (iv) unter dem Differenzdruck mit einer Wirkungszeit von 2 Minuten, insbesondere von 3 Minuten, insbesondere von 5 Minuten. Insbesondere wird im ersten Durchlauf des Schritts (iv) der durch das Evakuieren des Behälters erzeugte Differenzdruck (Unterdruck) für die Wirkzeiten aufrechterhalten, während die Stoffsuspension unter Rühren mittels des Rotors durchmischt (homogenisiert) wird. Anschließend wird durch das Öffnen der Ventile in den Belüftungsleitungen und dem damit erzielten zügigen Druckausgleich Kavitation zwischen den Fasern der Faserverbünde bzw. Faserverbundstoffe erzielt. Die Gasblasen zwischen den Fasern der Faserverbünde bzw. Faserverbundmaterialien zerfallen und werden mit Flüssigkeit befüllt, wodurch eine Separation erfolgt. Vorteilhafterweise werden die Faserverbünde bzw. Faserverbundmaterialien durch den ersten Durchlauf mit längerer Wirkungszeit derart vorbereitet, so dass das erfinderische Verfahren für die zu verwertbaren Fasern schonender verläuft. Dies führt zu einer verbesserten Faserausbeute und Faserqualität.

In einer weiteren Ausführungsform der Erfindung wird der Schritt (iv) unter Variation der Wirkungszeit wenigstens in 4 weiteren Durchläufen, insbesondere in 9 weiteren Durchläufen, bevorzugt in einem Bereich von 14 bis 25 weiteren Durchläufen, besonders bevorzugt in 29 weiteren Durchläufen wiederholt. Durch das Wiederholen des Schritts (iv) mit dem Evakuieren des Behälters und dem Erzeugen des Differenzdrucks, sowie mit dem darauffolgenden zügigen Öffnen des Ventils in wenigstens einer Belüftungsleitung wird die Ausbeute der wiederwertbaren Fasern, welche von dem Faserverbund bzw. den Faserverbundmaterialien separiert wurden, signifikant gesteigert.

In noch einer weiteren Ausführungsform der Erfindung wird der Schritt (v) in einem ersten Durchlauf in einem Zeitbereich von 60s bis 120s, insbesondere in einem Zeitbereich von 80s bis 120s, bevorzugt in einem Zeitbereich von 100 s bis 120s, besonders bevorzugt in 120s abgeschlossen.

In einer Ausführungsform der Erfindung beträgt der Unterdruck innerhalb des Behälters nach Schritt (v) höchstens -950 hPa, insbesondere höchstens -700 hPa, bevorzugt höchstens -500 hPa. Die Höhe des einzustellenden Unterdrucks ergibt sich aus der Art, Beschaffenheit und Menge des aufzulösenden Faserverbunds bzw. Faserverbundmaterials. Die eingebrachte kinetische Energie des Wassers beim Implodieren der Gasblase ist höher, wenn der Unterdruck höher gewählt wird. Dies ergibt sich durch das entstehende größere Blasenvolumen bei höherem Unterdruck. Vorteilhafterweise wird durch das Verwenden eines niedrigeren Drucks zum Aufbau des Unterdrucks weniger Energie benötigt, wodurch Kosten eingespart werden. Diesbezüglich ist die Höhe des Unterdrucks so gewählt, dass sich ein positives Verhältnis zwischen dem Auflöseergebnis und der Faserausbeute zu einer angemessenen Zeit und bei geringem Energieaufwand einstellt. Je nach Faserverbund bzw. Faserverbundmaterial kann die Kombination aus weniger Unterdruck mit mehreren Durchläufen des Schritts (iv) oder mehr Unterdruck in Verbindung mit weniger Durchläufen des Schritts (iv) zu einer besseren Faserausbeute führen.

In einer Ausführungsform besteht das in den Behälter gefüllte Material aus einer Stoffsuspension, bestehend aus wenigstens einer Flüssigkeit, umfassend Wasser oder Wasser und wenigstens ein weiteres Additiv und einem Faserverbund als Feststoffanteil, welche in einem Verhältnis von Flüssigkeit zu Feststoffanteil in einem Bereich zwischen 2% bis 35%, bevorzugt in einem Bereich zwischen 5% bis 25%, besonders bevorzugt in einem Bereich zwischen 8% bis 22% vorliegen. Das Verhältnis von Flüssigkeit zu Feststoffanteil wurde mit Verfahren gemäß DIN 54 359 ermittelt. Es hat sich als vorteilhaft herausgestellt, dass sich bei diesem Flüssigkeit-Feststoffanteil-Verhältnis eine gute Separation der wieder zu verwertbaren Fasern von den Faserverbünden bzw. Faserverbundmaterialien einstellt. Vorteilhafterweise wird in diesen Stoffdichten das Erzeugen des Kavitationsprozesses verbessert. In Stoffdichten größer den angegebenen Bereichen ist in der Suspension ein zu geringer Anteil an Wasser enthalten, wodurch das Durchführen des Kavitationsprozesses erschwert wird.

In einer weiteren Ausführungsform liegt nach Schritt (vi) die Beschleunigung des in den Behälter einströmenden Gases nach dem Öffnen des Ventils bzw. der Ventile im Ventilquerschnitt in einem Bereich zwischen 20 m/s$^2$ bis 20.000 m/s$^2$, insbesondere in einem

Bereich zwischen 2000 m/s² bis 20.000 m/s², bevorzugt in einem Bereich zwischen 6000 m/s² bis 16.000 m/s², besonders bevorzugt in einem Bereich zwischen 8.000 m/s² bis 16.000 m/s². Zudem liegt die Strömungsgeschwindigkeit nach Schritt (vi) des in den Behälter einströmenden Gases nach dem Öffnen des Ventils bzw. der Ventile in einem Bereich zwischen 43 m/s bis 1000 m/s, insbesondere in einem Bereich zwischen 100 m/s bis 750 m/s, bevorzugt in einem Bereich zwischen 200 m/s und 500 m/s, besonders bevorzugt in einem Bereich zwischen 300 m/s und 500 m/s. Der Gasblasenzerfall zwischen den Fasern der Faserverbünde bzw. der Faserverbundmaterialien wird durch die höheren Strömungsgeschwindigkeiten verstärkt und der gesamte Prozess optimiert. Wohingegen langsamere Strömungsgeschwindigkeiten den Prozess und somit den Gasblasenzerfall verschlechtern, hemmen oder Kavitation nicht zu Stande kommen lassen.

In einer Ausführungsform der Erfindung liegt das Verhältnis zwischen Behältervolumen und der effektiven Querschnittsfläche der Belüftungsleitung bzw. des/der Ventile in der Belüftungsleitung in einem Bereich zwischen 10.000 bis 100.000, insbesondere in einem Bereich zwischen 35.000 bis 75.000, bevorzugt in einem Bereich zwischen 50.000 bis 60.000 und besonders bevorzugt in einem Bereich zwischen 52.500 bis 57.500. Das Verhältnis wird über Formel 1 ermittelt:

$$ratio = \frac{V_C}{N* \left[\left(\frac{D_V}{2}\right)^2 * \pi * h\right]}$$

*Formel 1*

Hierbei stellt:

Ratio    das zu ermittelnde Verhältnis;
$V_C$    das Volumen des Behälters;
N    die Anzahl der über die Belüftungsleitung angeschlossenen Ventile;
$D_v$    der Durchmesser der Ventile; und
h    die Dicke der Verschlussklappe des Ventils dar.

Das erfindungsgemäße Verfahren beruht auf der Kavitation. Um Kavitation zwischen den Fasern in einem Faserverbund bzw. Faserverbundmaterialien zu erzeugen, muss die Luft in dem Behälter mit einem vorgegebenen Volumen zuerst evakuiert werden. In dem folgenden Schritt wird über wenigstes ein schnell geschaltetes Ventil in wenigstens einer Belüftungsleitung, die Stoffsuspension mit Luft beaufschlagt, um den Gasblasenzerfall zwischen den Fasern in den Faserverbünden bzw. Faserverbundmaterialien zu erzeugen. Um den positiven Effekt der Kavitation zu erzeugen, richtet sich die Anzahl der vorzusehenden Belüftungsleitungen mit den entsprechenden Ventilen und deren effektiver Querschnittsfläche nach dem Volumen des zu evakuierenden Behälters. Je nach Aufbau und Größe des Behälters beträgt die Anzahl der vorzusehenden Belüftungsleitungen mit entsprechendem Ventil wenigstens ein Stück. Insbesondere bedeutet das Verhältnis zwischen dem Behältervolumen und effektiver Querschnittsfläche der Belüftungsleitung bzw. der/des Ventils, dass die notwendige Geschwindigkeit des Druckausgleichs im Behälter vom Unterdruck innerhalb des Behälters zum Umgebungsdruck außerhalb des Behälters so schnell erfolgt, dass ein Gasblasenzerfall (Kavitation) zwischen den Fasern eines Faserverbundes bzw. Faserverbundmaterialien eintritt und diese separiert werden.

Das erfindungsgemäße Verfahren zeichnet sich auch dadurch aus, dass zum Beispiel kontaminierte Faserverbindungen oder auch Faser-Nichtfaserverbindungen (z.B. gebrauchter Getränkekarton, gebrauchte "Coffee to go" - Becher, etc.) und/oder andersartige Beimengungen in ursprünglichen Faserverbänden bei der Trennung durch Kavitation eine Reduktion der im Einsatzmaterial befindlichen Mikroorganismen nach sich ziehen, welche durch das erfindungsgemäße Verfahren reduziert werden kann. So reduziert sich die gemessene Gesamtkeimzahl (Schimmelpilze, Hefen und Bakterien) um 1 bis 40 % Prozent, was unter anderem auf die verbesserte Trennung und Abscheidung der unterschiedlichen Fraktionen zurückzuführen ist. Hieraus ergeben sich unter anderem die Vorteile, dass die Verbrauchsmenge an Mikroorganismen-reduzierenden Mitteln (Biozide) reduziert werden kann und damit eine Entlastung der Umwelt einhergeht. Ferner ergibt sich eine Reduzierung von Geruch-erzeugenden Inhaltsstoffen des aufgelösten Faserstoffes und eine Entlastung der Abwasseraufbereitungsanlage

Das erfindungsgemäße Verfahren bietet ferner die Möglichkeit die Eigenfestigkeit und Beschaffenheit einer pflanzlichen Faser, d.h. deren Festigkeitseigenschaften, durch den Kavitationsprozess bei der anschließenden und neuen Blatt- oder Faservliesbildung zu steigern.

Hieraus ergeben sich die Vorteile, dass eine durch den Kavitationsprozess behandelte und somit vereinzelte pflanzliche Faser eine stärkere Fibrillierung erfährt. Durch die an der Faseroberfläche eingebrachte Kavitation werden in vorangegangen Trocknungsprozessen an die Faserwand angelegte Fibrillen (Verhornung) aufgehoben und die Fibrille zur späteren Faser-Faserbindung wieder nutzbar gemacht. Dies führt unter anderem dazu, dass die Festigkeitseigenschaften (wie z.B. Bruchlast, Reisslänge, Berstdruck, etc.) eines aus diesem Faserstoff erzeugten Blattes um 2 bis 20 % gegenüber einem Blatt aus dem Stand-der-Technik-erzeugten Faserstoff gleichen Ursprungs ansteigen.

Schließlich zeigt das erfindungsgemäße Verfahren, dass entsprechend pumpfähig gemachte pflanzliche Fasern eine reduzierte Quellungsdauer aufweisen. In Versuchen zeigte sich, dass diese bei gleicher Faserstoffzusammensetzung weniger als drei Minuten gegenüber 20 Minuten mit einer Anlagentechnik aus dem Stand der Technik benötigte. Nachgeschaltete Anlagen zur Behandlung der pumpfähig gemachten Faserstoffe benötigen dadurch zur Erreichung desselben Ergebnisses weniger Energie.

Hieraus resultieren unter anderem die Vorteile, dass die reduzierte Mahlresistenz des Faserstoffes eine Einsparung der einzusetzenden Energie zur Mahlung mittels Refiner um bis zu 15% ermöglicht wird und ggf. auch der Bedarf an Chemikalien sowohl in der Masse des zur Blattbildung zum Einsatz kommenden Faserstoffes, als auch in einem anschließenden Oberflächenveredelungsschritt geringer sein kann, als bei Faserstoffen, welche mittels Stand-der-Technik-Anlagen aufbereitet wurden.

Eine weitere Möglichkeit, welche das erfindungsgemäße Verfahren bietet, ist, dass zum Beispiel während des Kavitationsprozesses pflanzliche Fasern in den Auflösungsprozess eingebracht werden können, um diesem ergänzende oder optimierte Eigenschaften zu verleihen. Hieraus ergibt sich der Vorteil, dass pflanzliche Fasern innerhalb des erfindungsgemäßen Verfahrens konditioniert werden; d.h. es können je nach Faserbeschaffenheit, Faserstruktur oder Faserursprung fasereigenschaftsverändernde Substanzen in die pflanzliche Faser eingebracht werden. Bei diesen Zusatzmitteln kann es sich zum Beispiel um färbende, hydrophobierende, fluoreszierende oder festigkeitssteigernde Mittel handeln, oder um Zusätze, die mit einer Nanoaktorik oder Nanosensorik ausgestattet sein können.

Nachfolgend werden anhand der Zeichnungen verschiedene Ausführungsformen der Erfindung erläutert, wobei diese die Erfindung nur beispielhaft erläutern und keine Einschränkung der allgemeinen Lehre der Erfindung in Bezug auf Abwandlungen darstellen. Dabei zeigt:

Fig. 1 ein Flussdiagramm zur Darstellung einer Ausführungsform des erfindungsgemäßen Verfahrens 100;

Fig. 2 eine schematische Darstellung einer Ausführungsform der Anlage 200 mit einem erfindungsgemäßen Kavitationsstoffauflöser300;

Fig. 3 eine schematische Darstellung einer Ausführungsform des erfindungsgemäßen Kavitationsstoffauflösers 300;

Fig. 4a eine schematische Darstellung einer Ausführungsform des Befülldeckels 330 des erfindungsgemäßen Kavitationsstoffauflösers 300 in der Seitenansicht;

Fig. 4b eine schematische Darstellung einer Ausführungsform des Befülldeckels 330 des erfindungsgemäßen Kavitationsstoffauflösers 300 in der Draufsicht;

Fig. 5 eine schematische Darstellung einer Ausführungsform des Ventils 341 der Belüftungsleitung 340 des erfindungsgemäßen Kavitationsstoffauflösers 300;

Fig. 6 eine schematische Darstellung der Öffnungsgeschwindigkeiten des Ventils 341 der Belüftungsleitung 340;

Fig. 7 eine schematische Darstellung des prozentualen Einsparpotentials an Energie und Auflösezeit durch das erfinderische Verfahren gegenüber im Stand der Technik bekannten Verfahren;

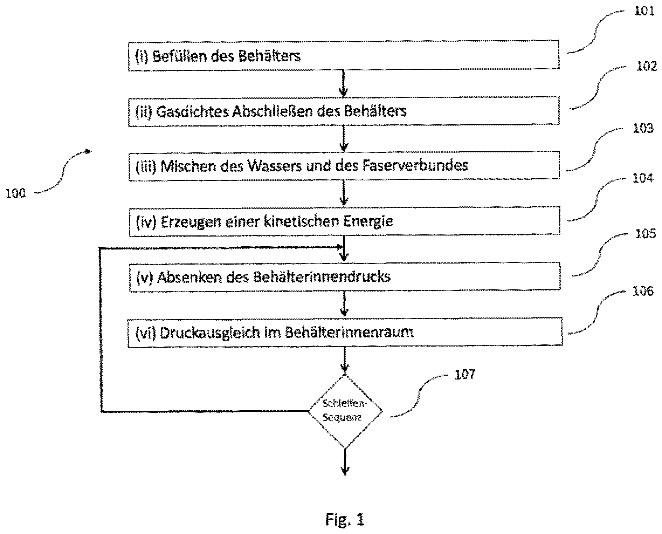

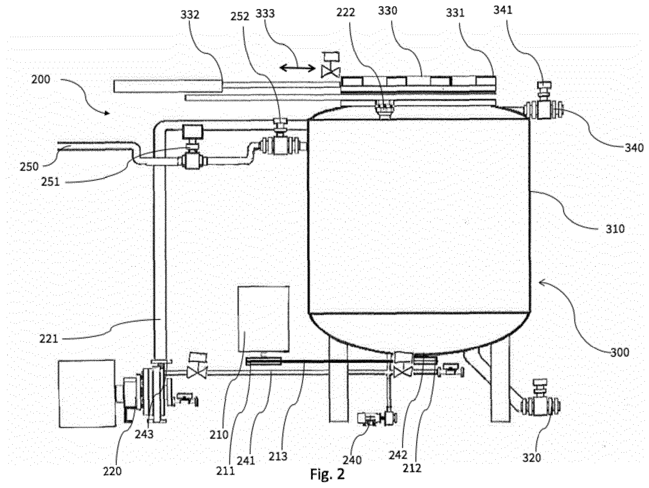

Fig. 1 zeigt ein Flussdiagramm zur Darstellung einer ersten Ausführungsform des erfindungsgemäßen Verfahrens 100. Insbesondere wird diese erste Ausführungsform des Verfahrens 100 mittels der in den Figuren 2 bis 5 dargestellten Ausführungsformen des Gerätes durchgeführt.

Vor dem Befüllen des Behälters 101 mit einer vorbestimmten Menge an Wasser und wenigstens einem Faserverbund bzw. Faserverbundmaterial wird die Sperrwasserpumpe 240 zur Bereitstellung des Sperrwassers über die Sperrwasserleitung 241 an den Gleitringdichtungen des Rotors 242 und an der Gleitringdichtung der Vakuumpumpe 243 eingeschaltet. Das Sperrwasser wird wenigstens mit einem Mindestdruck von sechs bar bereitgestellt. Bei einem Sperrwasserdruck unterhalb des Mindestdrucks werden der Rotor und die Vakuumpumpe 220 verriegelt und sind nicht betriebsbereit. Weiterhin wird der (Ab-) Leerschieber 320 als Ableeröffnung zur Entnahme der wiederverwertbaren Fasern sowie zum Abscheiden der Rejecte geschlossen. Für das Anheben- und Absenken des Befülldeckels 330, sowie für das Verfahren des Befülldeckels 330 entlang der Bewegungsrichtung 333 von der verschlossenen Position 331 in die offene Position 332 wird das Hydraulikaggregat 232 eingeschaltet. Anschließend wird der Befülldeckel 330 in senkrechter Richtung um wenige Milimeter angehoben und in die offene Position 332 verfahren. Im Folgenden wird der Hauptmotor 210 eingeschaltet, wodurch der Rotor sich mit der vorgegebenen Drehzahl dreht. Die Drehzahl liegt abhängig vom Faserverbund bzw. Faserverbundmaterial in einem Bereich von 11/min bis 500 1/min. Diese Ausführungsform bezieht sich auf den Einsatz eines Asynchronmotors 210 in Kombination mit Riemen 213 / Riemenscheibe 211, 212 oder einer Motor / Getriebe-Konstellation. Weiterhin wird das Ventil 341 (schnelle Klappen) in der Belüftungsleitung 340 geöffnet. Über den induktiven Durchflussmesser 251 wird die Wassermenge eingestellt, wodurch die für das Verfahren notwendige Stoffdichte in einem Verhältnis von Flüssigkeit zu Feststoffanteil in einem Bereich zwischen 2% bis 35%, bevorzugt in einem Bereich zwischen 5% bis 25%, besonders bevorzugt in einem Bereich zwischen 8% bis 22% liegt. Anschließend erfolgt der Flüssigkeitseintrag (Wasser) über das geöffnete Zuwasserventil 252 und die Zugabe des Faserverbundes bzw. Faserverbundmaterials in Abhängigkeit der zu erreichenden Stoffdichte über den verschiebbaren und gasdicht abschließbaren Befülldeckel 330.

Nach der Befüllung des Behälters 310 wird der Befülldeckel 330 gasdicht abgeschlossen 102 und das Hydraulikaggregat abgeschaltet. Während des gasdichten Abschließens des Befülldeckels 330 erfolgt durch den drehenden Rotor eine Vordurchmischung der Stoffsuspension.

Nach dem gasdichten Abschließen des Behälters 310 erfolgt der Schritt Durchmischen der Stoffsuspension 103 unter Verwendung mechanischer Energie, insbesondere durch Rühren mittels des Rotors für eine Zeit von wenigstens zwei Minuten. Nach Ablauf der vorgegebenen Durchmischzeit wird das Ventil 341 der Belüftungsleitung geschlossen.

Nach dem Durchmischen der Stoffsuspension erfolgt das Erzeugen einer kinetischen Energie in dem Faserverbund 104. Hierfür wird für den Aufbau eines Differenzdrucks (Unterdruck) in dem Behälterinnenraum die Vakuumpumpe 220 eingeschaltet.

Im Unterschritt (v) 105 wird unter Verwendung der Vakuumpumpe 220 ein Differenzdruck (Unterdruck) innerhalb des Behälters 310 von höchstens -950 hPa, insbesondere von höchstens - 700 hPa, bevorzugt von höchstens -500 hPa erzeugt. Die Höhe des Differenzdrucks ist von dem aufzulösenden Faserverbund bzw. den Faserverbundmaterialien abhängig und wird diesbezüglich zu Beginn des Verfahrens 100 vorgegeben. Der Aufbau und das Aufrechterhalten des Differenzdrucks (Unterdruck) verläuft in einem ersten Durchlauf des Schrittes 104 in Summe mit einer Wirkungszeit von 2 Minuten, insbesondere von 3 Minuten, bevorzugt von 5 Minuten. In diesem ersten Durchlauf wird die Stoffsuspension unter Rühren mittel des Rotors unter Beibehaltung des Differenzdrucks durchmischt und homogenisiert. Durch den Aufbau und das Aufrechterhalten des Differenzdrucks vergrößert sich das Volumen der Gasblasen in der Flüssigkeit. Durch das Homogenisieren nehmen die Fasern der Faserverbünde bzw. der Faserverbundmaterialien diese Flüssigkeit, in dieser Ausführungsform der Erfindung das Wasser, auf.

Mit Erreichen des vorher eingestellten Differenzdrucks (Unterdruck) im Innenraum des Behälters 310 wird die Belüftungsleitung 340 durch das Ventil 341 in der Belüftungsleitung 340 explosionsartig geöffnet und geschlossen. Durch das schnelle Öffnen und Schließen des Ventils 341 in Unterschritt (vi) 106 erfolgt ein explosionsartiger Druckausgleich im Behälterinnenraum. Durch den explosionsartigen Druckausgleich (vi) 106 implodieren die Gasblasen und das vergrößerte Volumen der Gasblasen wird mit Wasser geflutet, wodurch eine kinetische Energie auf den Faserverbund bzw. auf die Faserverbundmaterialien wirkt und diese voneinander trennt. Der Differenzdruck wird durch einen Druckaufnehmer 222 innerhalb des Behälters 310 ermittelt.

Nach dem ersten explosionsartigen Öffnen und Schließen des Ventils 341 in der Belüftungsleitung 340 innerhalb eines Zeitbereichs von 0,001s und 1s, bevorzugt innerhalb von 0,001s und 0,1s, besonders bevorzugt innerhalb von 0,001s und 0,01s, und dem hierdurch erfolgten Druckausgleich erzeugt die Vakuumpumpe 220 über die Vakuumleitung 221 weiterhin ein Vakuum und baut erneut einen Unterdruck im Behälter 310 auf.

Die Unterschritte (v) und (vi) werden unter kontinuierlichem Weiterlauf der Vakuumpumpe 220 in wenigstens vier weiteren Durchläufen, insbesondere in neun weiteren Durchläufen, bevorzugt in einem Bereich von vierzehn und fünfundzwanzig weiteren Durchläufen, besonders bevorzugt in neunundzwanzig weiteren Durchläufen, in einer Schleifensequenz 107 wiederholt. Die Anzahl der weiteren Durchläufe des im Millisekunden-Bereich öffnenden und schließenden Ventils 341 in der Belüftungsleitung 340 wird in Abhängigkeit des eingesetzten Faserverbunds bzw. des Faserverbundmaterials zu Beginn des Verfahrens 100 eingestellt.

Nach Beendigung der vorbestimmten Schleifensequenz 107 wird die Vakuumpumpe 220 ausgeschaltet und die Belüftungsleitung 340 durch das Öffnen des Ventils 341 in der Belüftungsleitung 340 geöffnet, wodurch ein restloser Druckausgleich zwischen dem Behälterinnendruck und dem Behälterumgebungsdruck erfolgt. Weiterhin wird das Hydraulikaggregat 232 eingeschaltet und der Befülldeckel 330 des gasdicht verschlossenen Behälters 310 wird in senkrechter Richtung um wenige Millimeter angehoben und aus der verschlossenen Position 331 in die offene Position 332 entlang der Bewegungsrichtung 333 verfahren. Nach Beendigung der Deckelbewegung wird das Hydraulikaggregat 232 ausgeschaltet. Über den induktiven Durchflussmesser 251 wird die Wassermenge für eine Nachverdünnung der Stoffsuspension eingestellt und durch Öffnen des Zuwasserventils 252 erfolgt der eingestellte Wassereintrag. Das Nachrühren erfolgt in Abhängigkeit des eingesetzten Faserverbundes bzw. des Faserverbundmaterials in einer Nachrührzeit in einem Bereich von größer 0 bis 3 min unter verwendung einer durchschnittlichen Rotordrehzahl in einem Bereich von 1 1/min bis 1000 1/min, bevorzugt in einem Bereich von 1 1/min bis 500 1/min, besonders bevorzugt in einem Bereich von 200 1/min bis 500 1/min. Nach Beendigung des Nachrührvorganges wird die Suspension über den Leerschieber (Ableerschieber) 320 abgelassen und der weiteren Verarbeitung und/oder Verwertung und/oder Entsorgung zugeführt. Für das Entleeren des Behälters 310 wird ggf. ein weiteres Mal nachgespült. Nach dem Entleeren des Behälters 310 wird der Hauptmotor 210 und anschließend die Sperrwasserpumpe 240 abgeschaltet.

In einer weiteren Ausführungsform wird ein Direktantrieb, beispielsweise ein Torquemotor/ Direktmotor als Hauptmotor 210 eingesetzt, wobei als erstes die Zugabe des Wassers und des Faserverbundes bzw. des Faserverbundmaterials in den Behälter 310 erfolgt und anschließend der Hauptmotor 210 und somit der Rotor eingeschaltet werden. Vorteilhafterweise kann durch diese weitere Ausführungsform eine zusätzliche Energieersparnis erreicht werden.

Fig. 2 zeigt die schematische zweidimensionale Darstellung einer Ausführungsform der Anlage 200 mit einem erfindungsgemäßen Kavitationsstoffauflöser 300 während des Verfahrensablaufes 100 mit geschlossenem Befülldeckel 330. Hierbei befindet sich der Befülldeckel 330 oberhalb der Befüllöffnung des Behälters 310 auf der geschlossen Position 331. Unter Verwendung des Hydraulikaggregats (nicht dargestellt) wird ein Hydraulikdruck bereitgestellt, wodurch der Befülldeckel 330 auf der geschlossenen Position 331 um wenige Millimeter senkrecht angehoben wird und anschließend entlang der Bewegungsrichtung 333 in Richtung der offenen Position 332 verfährt. Während des Befüllens des Behälters mit Faserverbund bzw. Faserverbundmaterialien befindet sich der Befülldeckel 330 in der offenen Position 332. Nach Abschluss des Befüllvorganges wird der Befülldeckel 330 entlang der Bewegungsrichtung 333 in Richtung der geschlossenen Position 331 verfahren und oberhalb der Befüllöffnung derart abgesetzt, so dass der Behälter 310 gasdicht verschlossen wird. Darüber hinaus weist die Anlage 200 mit Kavitationsstoffauflöser 300 einen Hauptmotor 210 auf. Die Antriebskraft des Hauptmotors 210 wird über zwei Riemenscheiben 211, 212 mittels eines Riemens 213 an den im Inneren des Behälters 310 liegenden Rotor (nicht dargestellt) übertragen. Die Verbindung zwischen dem Rotor und der Riemenscheibe 212 wird durch die Gleitringdichtung 242 abgedichtet. Hierfür wird durch die Sperrwasserpumpe 240 über die Sperrwasserleitung 241 Sperrwasser mit einem Mindestdruck von 6 bar bereitgestellt. Des Weiteren wird durch die Sperrwasserpumpe 240 über die Sperrwasserleitung 241 die Gleitringdichtung 243 an der Vakuumpumpe 220 mit Sperrwasser versorgt. Über die Vakuumleitung 221 wird mittels der Vakuumpumpe 220 die Luft aus dem Behälterinnenraum abgesaugt und somit ein Vakuum bzw. ein Differenzdruck (Unterdruck) im Behälter 310 erzeugt. Über den Druckaufnehmer 222 wird der im Behälter 230 erzeugte Differenzdruck ermittelt. Darüber hinaus weist die Anlage 200 mit Kavitationsstoffauflöser 300 eine Zuwasserleitung 250 auf, wodurch die für das Verfahren 100 notwendige Wassermenge mittels dem Öffnen des Zuwasserventils 252 dem Behälter 310 zugeführt wird. Unter Verwendung des induktiven Durchflussmessers 251 wird die in Abhängigkeit der Stoffdichte benötigte Wassermenge für das Verfahren 100 eingestellt. Über die Zuwasserleitung 250 wird weiterhin auch das Wasser für die Nachverdünnung der Stoffsuspension nach dem Verfahrensschritt (iv) zugeführt. Weiterhin weist die Anlage 200 mit Kavitationsstoffauflöser 300 eine Belüftungsleitung 340 mit einem Ventil 341 für den Druckausgleich nach dem Erreichen des eingestellten Differenzdrucks auf. Durch die explosionsartige Belüftung des Behälters 310 mittels dem schnellen Schließen des Ventils 341 in der Belüftungsleitung 340 wird Kavitation in dem Faserverbund bzw. in den Faserverbundmaterialien erzeugt.

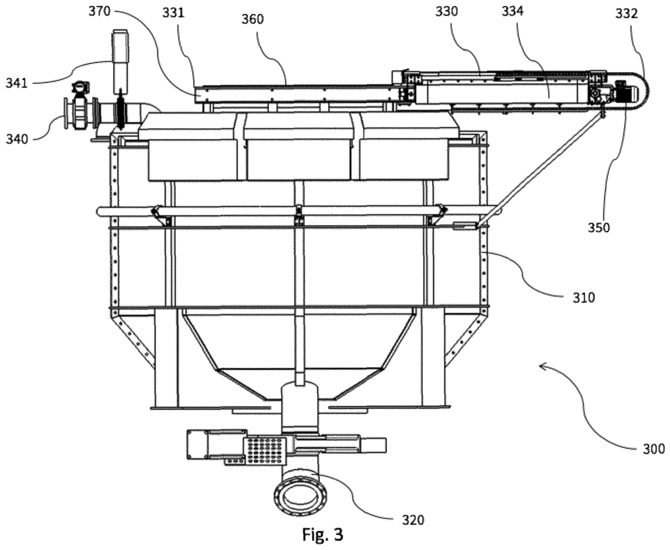

Fig. 3 zeigt die schematische Darstellung einer Ausführungsform des erfindungsgemäßen Kavitationsstoffauflösers 300 der Anlage 200 in einer Seitenansicht. In dieser Ausführungsform ist der Behälter 310 offen dargestellt und der Befülldeckel 330 befindet sich in der offenen Position 332. Der Befülldeckel 330 verfährt entlang der Bewegungsrichtung 333 von der offenen Position in die verschlossene Position über die an das Deckelgestell 334 angebrachten Laufräder 371 (nicht dargestellt), welche in einer an dem Behälter 310 angebrachten Geradführung 370 laufen. Vor Beginn der Bewegung des Befülldeckels 330 entlang der Bewegungsrichtung 333 wird der Befülldeckel 330 in senkrechter Richtung um wenige Millimeter angehoben, um vorteilhafterweise die in die Unterseite des Befülldeckels eingreifende, leicht hervorstehende und umlaufende Gummidichtung 360 nicht durch die Reibung des Verfahrens des Befülldeckels 330 entlang der Bewegungsrichtung 333 zu beschädigen.

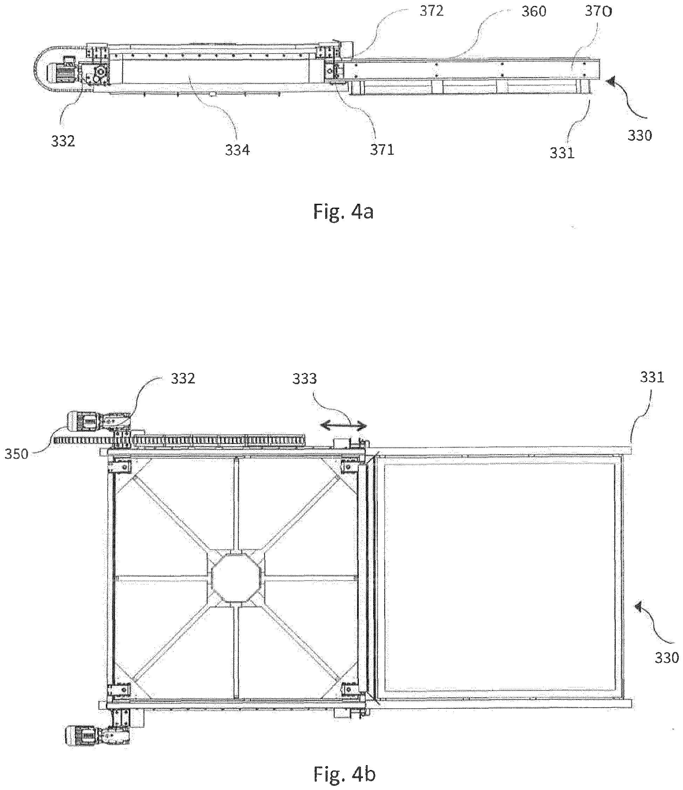

Fig. 4a und Fig. 4b zeigen eine schematische Darstellung einer Ausführungsform des Befülldeckels 330 des erfindungsgemäßen Kavitationsstoffauflösers 300 in der Seitenansicht und Draufsicht. In dieser Ausführungsform befindet sich der Befülldeckel 330 in der offenen Position 332. Der Befülldeckel 330 wird über den Antrieb 350, welcher an dem Deckelgestell 334 installiert ist, angetrieben und von der geschlossenen Position 331 in die offene Position 332 bzw. von der offenen Position 332 in die geschlossene Position 331 verfahren. Als Antrieb kann ein Motor aus der Gruppe, enthaltend Elektromotoren, hydraulische oder pneumatische Motoren, verwendet werden. Die Antriebskraft wird mittels Riemen, Kette und/oder Getriebe auf die Laufräder 371 übertragen, welche in der Geradführung laufen. Vor dem Verfahren des Befülldeckels entlang der Bewegungsrichtung 333 wird der Befülldeckel 330 in senkrechter Richtung um wenige Millimeter angehoben, um vorteilhafterweise die in die Unterseite des Befülldeckels 330 eingreifende, leicht hervorstehende- und umlaufende Gummidichtung 360 nicht zu beschädigen. Durch die an der Vorderseite des Befülldeckels 330 verbaute Bürstenleiste 372 werden während des Verfahrens des Befülldeckels 330 entlang der Bewegungsrichtung 333 Verunreinigungen an der Deckelöffnung des Behälters 310 entfernt.

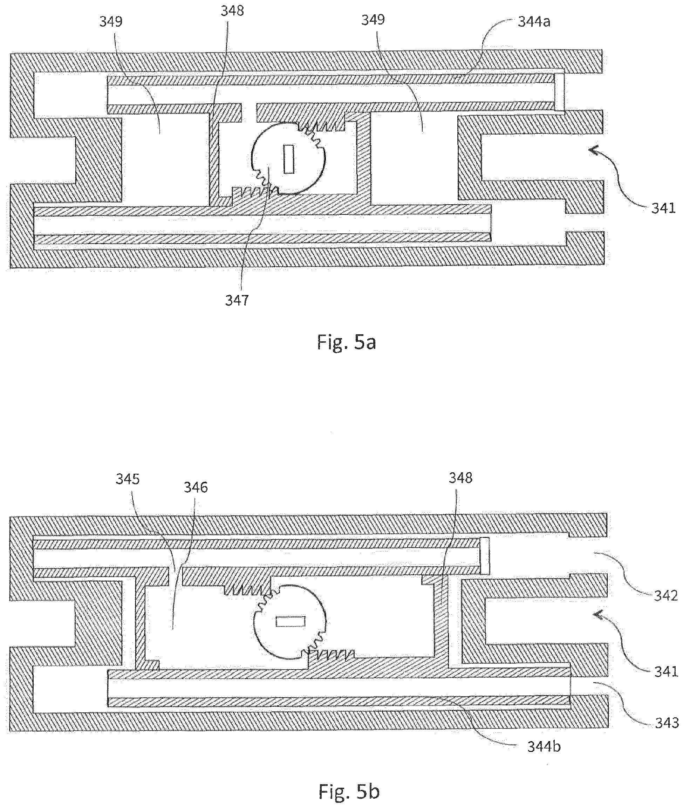

Fig. 5a und 5b zeigen Ausführungsbeispiele der modifizierten, im Stand der Technik bekannten Ventile 341 der Belüftungsleitung 340. Figuren 5a und 5b zeigen das doppelwirkende Ventil 341, insbesondere zeigt Fig. 5a das geschlossene Ventil 341 und Fig. 5b das offene Ventil 341. Durch den Anschluss 342 wird das Ventil 341 mit Druckluft beaufschlagt, wodurch die in das Führungsrohr 344A strömende Druckluft über die Bohrung 345 im Führungsrohr 344A in die innere Zylinderkammer 346 geleitet wird und die Kolben 348 und Führungsrohre 344A, 244B sich auseinander bewegen. Dies hat zur Folge, dass die zentrische Schaltwelle 347 eine 90° Drehbewegung im Gegenuhrzeigersinn ausführt und die daran befestigte Klappe in der Belüftungsleitung 340 sich ebenfalls um 90° dreht und die Belüftungsleitung 340 öffnet.

Für das Schließen des Ventils 341 wird der Anschluss 343 des Ventils 341 mit Druckluft beaufschlagt und die Druckluft strömt durch das Führungsrohr 344B in die beiden äußeren Druckkammern 349. Die Kolben 348 bewegen sich aufeinanderzu und drehen über die Zahlstange an den Kolben 348 die zentrische Schaltwelle 347 um 90° im Uhrzeigersinn.

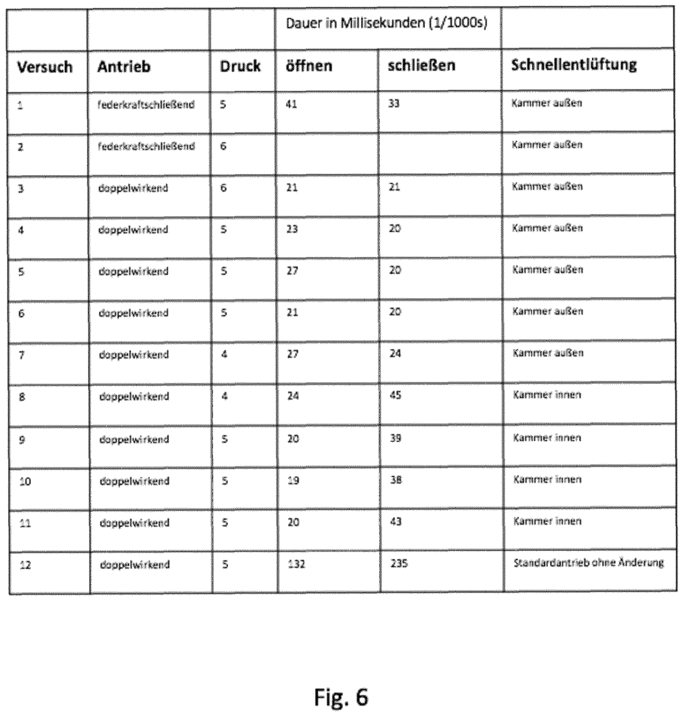

Fig. 6 zeigt die in Schaltversuchen durch eine Schnellbildkamera (1.000 Bilder/Sek) ermittelten Öffnungs- und Schließzeiten des modifizierten Ventils 341 der Entlüftungsleitung 340. Für die Erzeugung der Kavitation in den Faserverbünden bzw. Faserverbundmaterialen ist es notwendig, dass in einem minimalen Zeitbereich ein Druckausgleich zwischen dem Behälterinnendruck und dem Behälterumgebungsdruck erfolgt. Diesbezüglich wurden die Schaltzeiten der unterschiedlichen Ausführungsformen der Ventile in den Fig. 5a und 5b unter gleichbleibenden Bedingungen aufgenommen und ausgewertet, um die schnellste Öffnungszeit zu ermitteln. Hierbei zeigt sich im Vergleich zu dem Standard-Antrieb (Versuch 10) eine wesentliche Verbesserung der Öffnungszeit um 105ms bis 112ms. Vorteilhafterweise wird durch die schnellere Öffnungszeit die Kavitation in den Faserverbünden bzw. Faserverbundmaterialien und somit die Separation der Fasern von den Rejecten verbessert, wodurch die Auflösedauer reduziert wird. Dies reduziert die Kosten für das Verfahren zum Trennen von Fasern aus Faserverbünden bzw. Faserverbundmaterialien.

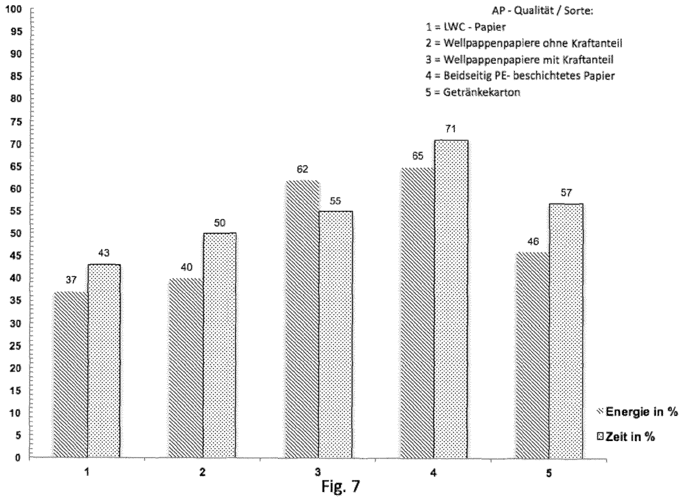

Fig. 7 zeigt das prozentuale Einsparpotential des erfinderischen Verfahrens bezogen auf den spezifischen Energieverbrauch unter Verwendung des Kavitationsstoffauflösers 300 im Vergleich zu im Stand der Technik bekannten konventionellen Stofflösern bei fünf verschiedenen Versuchsreihen mit fünf unterschiedlich aufzutrennenden Altpapierverbünden. Des Weiteren wird in Fig. 7 das prozentuale Einsparpotential an Zeit, insbesondere an Auflösedauer von Faserverbünden bzw. Faserverbundmaterialien dargestellt, welches durch Messungen ebenfalls in den fünf Versuchsreihen ermittelt wurde. Die Versuchsreihen wurden in der Versuchsanlage unter identischen Testbedingungen bei einer Wassertemperatur von 8°C und einer Stoffdichte von 12,5% aufgenommen. Diese Testparameter stellen keine Einschränkung und auch keine Betriebsparameter für die funktionsfähige Anlage 200 dar, sondern dienen nur zu Testzwecken für die Versuchsreihen in der Versuchsanlage. Der Fig. 7 ist zu entnehmen, dass in allen fünf Versuchsreihen mit unterschiedlichen Altpapierverbünden durch den Einsatz des erfinderischen Verfahrens 100 unter Verwendung des Kavitationsstoffauflösers 300 gegenüber konventionellen Verfahren und Stoffauflösern eine signifikante Energieersparnis erzielt werden konnte. Die Energieersparnis liegt hier in einem Bereich von 37% bei LWC - Papier bis 65% bei beidseitig PEbeschichtetem Papier. Vorteilhafterweise werden durch den geringeren Verbrauch an Energie die Kosten für das Betreiben des Verfahrens und der Anlage zur Trennung von Fasern aus Faserverbünden bzw. Faserverbundmaterialien gesenkt. Weiterhin vorteilhaft ist die reduzierte Auflösedauer in einem Bereich von 43% bis 71% im Vergleich zu konventionellen Verfahren. Dies führt indirekt zu einer zusätzlichen Kostenreduzierung durch Steigerung der Produktivität, da in gleicher Verfahrenszeit mehr Faserverbünde durch die geringerAuflösedauer verarbeitet und aufgetrennt werden können, als in konventionellen Verfahren. Weiterhin vorteilhaft wird durch die zeitlich reduzierte Auflösedauer auch die Behandlungsdauer für das Einweichen und das Aufquellen der Faserverbünde bzw. der Faserverbundmaterialien reduziert, wodurch die von der Faser abgetrennten Rejecte nicht unnötigerweise weiter zerkleinert werden und in anschließenden kostenverursachenden Prozessschritten von den eigentlichen recycelten Faser getrennt werden müssen. Zudem wird eine Beschädigung der Fasern durch die innere Reibung durch die kürzere Behandlungsdauer reduziert, was zu einer höheren Ausbeute und Qualität an wiederverwertbaren Fasern füht.

Bezugszeichenliste

| | |
|---|---|
| 100 | Verfahren |
| 101 | Verfahrensschritt Befüllen des Behälters |
| 102 | Verfahrensschritt gasdichtes Abschließen des Behälters |
| 103 | Verfahrensschritt Mischen des Wassers und des Faserverbundes |
| 104 | Verfahrensschritt Erzeugen kinetischer Energie |
| 105 | Verfahrens-Unterschritt Absenken des Behälterinnendrucks |
| 106 | Verfahrens-Unterschritt Druckausgleich im Behälterinnenraum |
| 107 | Schleifensequenz Wiederholung des Verfahrensschritts Erzeugen kinetischer Energie |
| 200 | Anlage zum Vereinzeln von Fasern |
| 210 | Hauptmotor |
| 211 | Riemenscheibe |
| 212 | Riemenscheibe |
| 213 | Riemen |
| 220 | Vakuumpumpe |
| 221 | Vakuumleitung |
| 222 | Druckaufnehmer |
| 240 | Sperrwasserpumpe |
| 241 | Sperrwasserleitung |
| 242 | Gleitringdichtungen des Rotors |
| 243 | Gleitringdichtung derVakuumpumpe |
| 250 | Zuwasserleitung |
| 251 | induktiver Durchflussmesser |
| 252 | Zuwasserventil |
| 300 | Kavitationsstoffauflöser |
| 310 | Behälter |

320 (Ab-) Leerschieber
330 Befülldeckel
331 verschlossene Position
332 offene Position
333 Bewegungsrichtung
334 Deckelgestell
340 Belüftungsleitung
341 Ventil der Belüftungsleitung
342 Anschluss des Ventils der Belüftungsleitung
343 Anschluss des Ventils der Belüftungsleitung
344A Führungsrohr
344B Führungsrohr
345 Bohrung
346 innere Zylinderkammer
347 zentrische Schaltwelle
348 Kolben
349 äußere Druckkammer
350 Antrieb
360 hervorstehende und umlaufende Gummidichtung
370 Geradführung
371 Laufräder
372 Bürstenleiste

## Patentansprüche

1. Verfahren (100) zum Vereinzeln von Fasern unter Verwendung der folgenden Elemente:

   • einem Behälter (310) mit einem vorbestimmten Aufnahmevolumen;
   • einer Vakuumpumpe (220), welche über eine Vakuumleitung (221) und einem Ventil mit dem Behältervolumen verbunden ist;
   • eine Belüftungsleitung (340) mit einer vorbestimmten Querschnittsöffnung und mindestens einem Ventil (341), wobei das Ventil (341) in einem Zeitbereich von 19ms bis 41ms von einem geschlossenen Zustand in einen offenen Zustand und in einem Zeitbereich von 20ms bis 45ms von dem offenen Zustand In den geschlossenen Zustand schaltbar ist;

   und das Verfahren wenigstens die folgenden Schritte aufweist:

   i) Befüllen des Behälters (310) mit einer vorbestimmten Menge an Wasser und wenigstens einem Faserverbund;
   ii) Gasdichtes Abschließen des Behälters (310);
   iii) Mischen des Wassers und des Faserverbundes mittels mechanischer Energie, insbesondere durch Rühren;
   iv) Erzeugen einer kinetischen Energie in dem Faserverbund durch die Schritte:
   v) Absenken des Behälterinnendrucks auf höchstens -950 hPa;

   vi) Druckausgleich im Behälterinnenraum zur Erzeugung von Kavitation in dem Faserverbund; wobei, Schritt (vi) innerhalb eines Zeitbereichs von 0,001 s und 1 s stattfindet.

2. Verfahren nach Anspruch 1, **dadurch gekennzeichnet, dass** das Ventil über die Vakuumleitung (221) mit einer Rückschlagklappe verbunden ist.

3. Verfahren nach Anspruch 1, **dadurch gekennzeichnet, dass** das Ventil (341) In einem Zeitbereich von 19ms bis 27ms, vorzugsweise in einem Zeitbereich von 19ms bis 24ms, von dem geschlossenen Zustand in den offenen Zustand und/oder in einem Zeitbereich von 20ms bis 39ms, vorzugsweise in einem Zeitbereich von 20ms bis 33ms, besonders bevorzugt in einem Zeitbereich von 20ms bis 24ms, von dem offenen Zustand in den geschlossenen Zustand geschaltet wird.

4. Verfahren nach Anspruch 1 oder 2, **dadurch gekennzeichnet, dass** Schritt (vi) innerhalb eines Zeitbereiches von 0,001s bis 0,1s, bevorzugt innerhalb eines Zeitbereiches von 0,001s bis 0,01s, stattfindet.

5. Verfahren nach einem der vorstehenden Ansprüche, **dadurch gekennzeichnet, dass** der Faserverbund aus einer Gruppe von Fasersystemen, enthaltend Naturfasern, wie pflanzliche Fasern und/oder mineralische Fasern und/oder Chemiefasern, gebildet aus natürlichen Polymeren pflanzlicher oder tierischer Herkunft, natürlichen Polymeren und/oder synthetischen Polymeren und Folien aus natürlichen Polymeren und/oder synthetischen Polymeren und/oder Metall und Mischungen derselben, ausgewählt wird.

6. Verfahren nach einem der vorstehenden Ansprüche, **dadurch gekennzeichnet, dass** neben dem Wasser und dem Faserverbund wenigstens ein weiteres Additiv zugegeben wird, welches aus einer Gruppe ausgewählt wird, welche Säuren, Laugen, Dispergiermittel, Benetzungsmittel und Kombinationen hiervon umfasst.

7. Verfahren nach einem der vorstehenden Ansprüche, **dadurch gekennzeichnet, dass** der Faserverbund vor Eintrag in den Behälter zerkleinert wurde und vorzugsweise die Einzelteile des Faserverbundes eine Kantenfläche von weniger als 10000 mm$^2$, vorzugsweise von weniger als 100 mm$^2$ und besonders bevorzug von weniger als 25 mm$^2$ aufweisen.

8. Verfahren nach Anspruch 7, **dadurch gekennzeichnet, dass** die Kantenfläche der Einzelteile des Faserverbundes im Wesentlichen proportional zum Aufnahmevolumen des Behälters (310) steigt.

9. Verfahren nach einem der vorstehenden Ansprüche, **dadurch gekennzeichnet, dass** während Schritt (iv) unter Einwirkung mechanischer Energie ein Differenzdruck wenigstens für eine Wirkungszeit von 2 Minuten, insbesondere von 3 Minuten, bevorzugt von 5 Minuten, gehalten wird,

10. Verfahren nach einen der vorstehenden Ansprüche, **dadurch gekennzeichnet, dass** Schritt (iv) um eine vorbestimmte Anzahl von Durchläufen wiederholt wird.

11. Verfahren nach Anspruch 10, **dadurch gekennzeichnet, dass** der erste Durchlauf des Schritts (iv) unter dem Differenzdruck mit der Wirkungszeit nach Anspruch 9 abläuft.

12. Verfahren nach Anspruch 10 oder 11, **dadurch gekennzeichnet, dass** Schritt (iv) unter Variation der Wirkungszeit wenigstens in vier weiteren Durchläufen, insbesondere in neun weiteren Durchläufen, bevorzugt in einem Bereich von vierzehn bis fünfundzwanzig weiteren Durchläufen, besonders bevorzugt in neunundzwanzig weiteren Durchläufen, wiederholt wird.

13. Verfahren nach einem der vorstehenden Ansprüche, **dadurch gekennzeichnet, dass** Schritt (v) in einem Zeitbereich von 60s bis 120s, insbesondere in einem Zeitbereich von 80s bis 120s, bevorzugt in einem Zeitbereich von 100 s bis 120s, besonders bevorzugt in 120s, abgeschlossen ist.

14. Verfahren nach einem der vorstehenden Ansprüche, **dadurch gekennzeichnet, dass** der Unterdruck innerhalb des Behälters (310) nach Schritt (v) höchstens -700 hPa, bevorzugt höchstens -500 hPa, beträgt.

15. Verfahren nach einem der vorstehenden Ansprüche, **dadurch gekennzeichnet, dass** das In den Behälter (310) gefüllte Material aus einer Stoffsuspension besteht, die aus wenigstens einer Flüssigkeit, umfassend Wasser oder Wasser und wenigstens ein weiteres Additiv, und einem Faserverbund als Feststoffanteil besteht, wobei das Verhältnis von Flüssigkeit zu Feststoffanteil In einem Bereich zwischen 2% bis 35%, bevorzugt in einem Bereich zwischen 5% bis 25%, besonders bevorzugt in einem Bereich zwischen 8% bis 22%, liegt.

16. Verfahren nach einem der vorstehenden Ansprüche, **dadurch gekennzeichnet, dass** nach Schritt (vi) die Beschleunigung des in den Behälter (310) einströmenden Gases nach dem Öffnen des Ventils (341) bzw, der Ventile (341) im Ventilquerschnitt in einem Bereich zwischen 20 m/s$^2$ bis 20.000 m/s$^2$, insbesondere in einem Bereich zwischen 2000 m/s$^2$ bis 20.000 m/s$^2$, bevorzugt in einem Bereich zwischen 6000 m/s$^2$ bis 16.000 m/s$^2$, besonders bevorzugt in einem Bereich zwischen 8.000 m/s$^2$ bis 16.000 m/s$^2$, liegt.

17. Verfahren nach einem der vorstehenden Ansprüche, **dadurch gekennzeichnet, dass** nach Schritt (vi) die Strömungsgeschwindigkeit des in den Behälter (310) einströmenden Gases nach dem Öffnen des Ventils (341) bzw. der Ventile (341) in einem Bereich zwischen 43 m/s bis 1000 m/s, insbesondere in einem Bereich zwischen 100 m/s bis 750 m/s, bevorzugt in einem Bereich zwischen 200 m/s und 500 m/s, besonders bevorzugt in einem Bereich zwischen 300 m/s und 500 m/s, liegt.

18. Verfahren nach einem der vorstehenden Ansprüche, **dadurch gekennzeichnet, dass** das Verhältnis zwischen Behältervolumen und der effektiven Querschnittsfläche der Belüftungsleitung (340) bzw. des/der Ventile (341) in der Belüftungsleitung in einem Bereich zwischen 10.000 bis 100.000, insbesondere in einem Bereich zwischen 35.000 bis 75.000, bevorzugt in einem Bereich zwischen 50.000 bis 60.000 und besonders bevorzugt in einem Bereich zwischen 52.500 bis 57.500 liegt, wobei das Verhältnis über die folgende Formel ermittelt wird:

$$ratio = \frac{V_C}{N* \left[ \left( \frac{D_V}{2} \right)^2 * \pi * h \right]}$$

wobei 'Ratio' das zu ermittelnde Verhältnis, 'V$_c$' das Volumen des Behälters, 'N' die Anzahl der über die Belüftungsleitung angeschlossenen Ventile, 'D$_v$' den Durchmesser der Ventile, und 'h' die Dicke der Verschlussklappe des Ventils darstellt.

## Claims

1. A method (100) for the separation of fibres using the following elements:

    • A container (310) with a predetermined reception volume;
    • A vacuum pump (220), which is connected to the container volume via a vacuum line (221) and a valve;
    • A ventilation line (340) with a predetermined cross-sectional opening and at least one valve (341), wherein the valve (341) can be switched from a closed state to an open state within a time period of between 19 msec and 41 msec, and from the open state to the closed state within a time period of between 20 msec and 45 msec;

and the method has at least the following steps:

i) Filling of the container (310) with a predetermined quantity of water and at least one fibre composite;
ii) Gas-tight closure of the container (310);
iii) Mixing of the water and the fibre composite by means of mechanical energy, in particular by stirring;
iv) Generation of kinetic energy in the fibre composite by the steps:
v) Reduction of the internal pressure of the container to not more than -950 hPa;
vi) Pressure equalisation in the interior of the container for the generation of cavitation in the fibre composite; wherein,

step (vi) takes place within a time period of between 0.001 sec and 1 sec.

2. Method according to Claim 1, **characterised in that**, the valve is connected via the vacuum line (221) to a non-return valve.

3. Method according to Claim 1, **characterised in that**, the valve (341) is switched from the closed state to the open state within a time period of between 19 msec and 27 msec, preferably within a time period of between 19 msec and 24 msec, and/or from the open state to the closed state within a time period of between 20 msec and 39 msec, preferably within a time period of between 20 msec and 33 msec, particularly preferably within a time period of between 20 msec and 24 msec.

4. Method according to Claim 1 or 2, **characterised in that**, step (vi) takes place within a time period of between 0.001 sec and 0.1 sec, preferably within a time period of between 0.001 sec and 0.01 sec.

5. Method according to one of the preceding claims, **characterised in that**, the fibre composite is selected from a group of fibre systems containing natural fibres, such as vegetable fibres, and/or mineral fibres, and/or chemical fibres, formed from natural polymers of vegetable or animal origin, natural polymers, and/or synthetic polymers, and films of natural polymers, and/or synthetic polymers, and/or metal and mixtures of the same.

6. Method according to one of the preceding claims, **characterised in that**, in addition to the water and the fibre composite, at least one further additive is added, which is selected from a group comprising acids, alkalis, dispersants, wetting agents, and combinations thereof.

7. Method according to one of the preceding claims, **characterised in that**, the fibre composite has been crushed before entering the container, and the individual parts of the composite material preferably have an edge surface area of less than 10,000 mm$^2$, preferably less than 100 mm$^2$ and particularly preferably less than 25 mm$^2$.

8. Method according to Claim 7, **characterised in that**, the edge surface area of the individual parts of the fibre composite increases essentially in proportion to the reception volume of the container (310).

9. Method according to one of the preceding claims, **characterised in that**, during step (iv) a differential pressure is maintained under the action of mechanical energy for an operating period of at least 2 minutes, in particular of 3 minutes, preferably of 5 minutes.

10. Method according to one of the preceding claims, **characterised in that**, step (iv) is repeated for a predetermined number of iterations.

11. Method according to Claim 10, **characterised in that**, the first iteration of step (iv) takes place under the differential pressure with the operating period according to Claim 9.

12. Method according to Claim 10 or 11, **characterised in that**, step (iv) is repeated, with a variation of the operating period, in at least four further iterations, in particular in nine further iterations, preferably within a range of fourteen to twenty-five further iterations, particularly preferably in twenty-nine further iterations.

13. Method according to one of the preceding claims, **characterised in that**, step (v) is completed within a time period of between 60 sec and 120 sec, in particular within a time period of between 80 sec and 120 sec, preferably within a time period of between 100 sec and 120 sec, particularly preferably in 120 sec.

14. Method according to one of the preceding claims, **characterised in that**, the reduced pressure inside the container (310) after step (v) is not more than -700 hPa, preferably not more than -500 hPa.

15. Method according to one of the preceding claims, **characterised in that**, the material that is filled into the container (310) consists of a material suspension consisting of at least one liquid, comprising water, or water and at least one further additive, and a fibre composite as the solid content, wherein the ratio of liquid-to-solid content lies in a range between 2 % and 35 %, preferably in a range between 5 % and 25 %, particularly preferably in a range between 8 % and 22 %.

16. Method according to one of the preceding claims, **characterised in that**, after step (vi), the acceleration of the gas flowing into the container (310) after the opening of the valve (341), or valves (341), in the valve cross-section is in a range between 20 m/s$^2$ and 20,000 m/s$^2$, in particular in a range between 2,000 m/s$^2$ and 20,000 m/s$^2$, preferably in a range between 6,000 m/s$^2$ and 16,000 m/s$^2$, particularly preferably in a range between 8,000 m/s$^2$ and 16,000 m/s$^2$.

17. Method according to one of the preceding claims, **characterised in that**, after step (vi) the flow velocity of the gas flowing into the container (310) after the opening of the valve (341), or valves (341), is in a range between 43 m/sec and 1000 m/sec, in particular in a range between 100 m/sec and 750 m/sec, preferably in a range between 200 m/sec and 500 m/sec, particularly preferably in a range between 300 m/sec and 500 m/sec.

18. Method according to one of the preceding claims, **characterised in that**, the ratio between container volume and the effective cross-sectional area of the ventilation line (340), that is to say, of the valve(s) (341) in the ventilation line (340) lies in a range between 10,000 and 100,000, in particular in a range between 35,000 and 75,000, preferably in a range between 50,000 and 60,000, and particularly preferably in a range between 52,500 and 57,500, wherein the ratio is determined using the following formula:

$$ratio = \frac{V_C}{N* \left[ \left( \frac{D_V}{2} \right)^2 * \pi * h \right]}$$

wherein 'ratio' is the ratio to be determined, 'V$_c$' is the volume of the container, 'N' is the number of valves connected via the ventilation line, 'D$_v$' is the diameter of the valves, and 'h' is the thickness of the closure flap of the v0alve.

## Revendications

1. Procédé (100) en vue de la séparation de fibres en utilisant les éléments suivants :

   • un récipient (310) avec un volume récepteur prédéfini ;
   • une pompe à vide (220), qui est reliée via une conduite de vide (221) et une vanne au volume du récipient ;
   • une conduite de purge d'air (340) avec une ouverture de section prédéfinie et au moins une vanne (341), sachant que la vanne (341) est commutable d'un état fermé dans un état ouvert dans une plage temporelle de 19 ms à 41 ms et de l'état ouvert dans l'état fermé dans une plage temporelle de 20 ms à 45 ms ;

   et que la procédure comporte au moins les étapes suivantes de :

   i) remplissage du récipient (310) avec une quantité prédéfinie d'eau et au moins un composite en fibres ;
   ii) fermeture étanche au gaz du récipient (310) ;
   iii) mélange de l'eau et du composite en fibres au moyen d'énergie mécanique, notamment par remuage ;
   iv) génération d'une énergie cinétique dans le composite en fibres par les étapes de :
   v) réduction de la pression intérieure du récipient à un maximum de -950 hPa ;
   vi) compensation de pression dans l'habitacle du récipient en vue de la génération de cavitation dans le composite en fibres ;

   sachant que l'étape (vi) a lieu au sein d'une plage temporelle de 0,001 s et de 1 s.

2. Procédé selon la revendication 1, **caractérisé en ce que**
   la vanne est reliée via la conduite de vide (221) à un clapet articulé.

3. Procédé selon la revendication 1, **caractérisé en ce que**
   la vanne (341) est commutée de l'état fermé dans l'état ouvert dans une plage temporelle de 19 ms à 27 ms, de préférence dans une plage temporelle de 19 ms à 24 ms et/ou de l'état ouvert dans l'état fermé dans une plage temporelle de 20ms à 39ms, de préférence dans une plage temporelle de 20ms à 33ms, de préférence particulière dans une plage temporelle de 20ms à 24ms.

4. Procédé selon la revendication 1 ou 2, **caractérisé en ce que**
   l'étape (vi) a lieu au sein d'une plage temporelle de 0,001 s à 0,1 s, de préférence au sein d'une plage temporelle de 0,001s à 0,01 s.

5. Procédé selon une quelconque des revendications précédentes, **caractérisé en ce que**
   le composite en fibres est sélectionné à partir d'un groupe de systèmes de fibres, contenant des fibres naturelles, comme des fibres végétales et/ou des fibres minérales et/ou des fibres chimiques, constituées de polymères naturels d'origine végétale ou animale, de polymères naturels et/ou de polymères synthétiques et de feuilles en polymères naturels et/ou en polymères synthétiques et/ou en métal et de mélanges de ces derniers.

**6.** Procédé selon une quelconque des revendications précédentes, **caractérisé en ce que** outre l'eau et le composite en fibres, au moins un autre additif est additionné, qui est sélectionné à partir d'un groupe qui comprend des acides, des lessives alcalines, des agents de dispersion, des agents mouillants et des combinaisons de ceux-ci.

**7.** Procédé selon une quelconque des revendications précédentes, **caractérisé en ce que** le composite en fibres a été broyé avant chargement dans le récipient et **en ce que**, de préférence, les éléments du composite en fibres présentent une surface de bord inférieure à 10000 mm$^2$, de préférence inférieure à 100 mm$^2$ et de préférence particulière inférieure à 25 mm$^2$.

**8.** Procédé selon la revendication 7, **caractérisé en ce que** la surface de bord des éléments du composite en fibres augmente pour l'essentiel proportionnellement au volume récepteur du récipient (310).

**9.** Procédé selon une quelconque des revendications précédentes, **caractérisé en ce que** pendant l'étape (iv), sous l'effet de l'énergie mécanique, une pression différentielle est maintenue au moins pour un temps d'action de 2 minutes, notamment de 3 minutes, de préférence de 5 minutes.

**10.** Procédé selon une quelconque des revendications précédentes, **caractérisé en ce que** l'étape (iv) est répétée d'un nombre prédéterminé de cycles.

**11.** Procédé selon la revendication 10, **caractérisé en ce que** le premier cycle de l'étape (iv) s'effectue sous la pression différentielle avec le temps d'action selon la revendication 9.

**12.** Procédé selon la revendication 10 ou 11, **caractérisé en ce que** l'étape (iv) est répétée sous variation du temps d'action au moins en quatre autres cycles, notamment en neuf autres cycles, de préférence dans une plage de quatorze à vingt-cinq autres cycles, de préférence particulière en vingt-neuf autres cycles.

**13.** Procédé selon une quelconque des revendications précédentes, **caractérisé en ce que** l'étape (v) est terminée dans une plage temporelle de 60 s à 120 s, notamment dans une plage temporelle de 80 s à 120 s, de préférence dans une plage temporelle de 100 s à 120 s, de préférence particulière en 120 s.

**14.** Procédé selon une quelconque des revendications précédentes, **caractérisé en ce que** la dépression au sein du récipient s'élève après l'étape (v) au maximum à -700 hPa, de préférence au maximum à -500 hPa.

**15.** Procédé selon une quelconque des revendications précédentes, **caractérisé en ce que** la matière chargée dans le récipient (310) se compose d'une suspension pâteuse, qui se compose d'au moins un liquide, comportant de l'eau ou de l'eau et au moins un autre additif, et d'un composite en fibres comme part en matières solides, sachant que le rapport du liquide à la part en matières solides se trouve dans une plage entre 2% à 35%, de préférence dans une plage entre 5% à 25%, de préférence particulière dans une plage entre 8% à 22%.

**16.** Procédé selon une quelconque des revendications précédentes, **caractérisé en ce que** après l'étape (vi), l'accélération du gaz pénétrant dans le récipient (310) après l'ouverture de la vanne (341) et/ou des vannes (341) dans la section de vanne se trouve dans une plage entre 20 m/s$^2$ à 20.000 m/s$^2$, notamment dans une plage entre 2000 m/s$^2$ à 20.000 m/s$^2$, de préférence dans une plage entre 6000 m/s$^2$ à 16.000 m/s$^2$, de préférence particulière dans une plage entre 8.000 m/s$^2$ à 16.000m/s$^2$.

**17.** Procédé selon une quelconque des revendications précédentes, **caractérisé en ce que** après l'étape (vi), la vitesse de courant du gaz pénétrant dans le récipient (310) après l'ouverture de la vanne (341) et/ou des vannes (341) se trouve dans une plage entre 43 m/s à 1000 m/s, notamment dans une plage entre 100 m/s et 750 m/s, de préférence dans une plage entre 200 m/s et 500 m/s, de préférence particulière dans une plage entre 300 m/s et 500 m/s.

**18.** Procédé selon une quelconque des revendications précédentes, **caractérisé en ce que** le rapport entre le volume du récipient et la surface de section effective de la conduite de purge d'air (340) et/ou de la/des vannes (341) dans la conduite de purge d'air se trouve dans une plage entre 10.000 à 100.000, notamment dans une plage entre 35.000 à 75.000, de préférence dans une plage entre 50.000 à 60.000 et de préférence particulière dans une plage entre 52.500 à 57.500, sachant que le rapport est calculé via la formule suivante :

$$ratio = \frac{V_C}{N* \left[\left(\frac{D_V}{2}\right)^2 * \pi * h\right]}$$

sachant que « ratio » représente le rapport à calculer, « $V_c$ » le volume du récipient, « N » le nombre des vannes raccordées via la conduite de purge d'air, « Dv » le diamètre des vannes, et « h » l'épaisseur du clapet de la vanne.

Fig. 1

EP 3 541 989 B1

Fig. 2

Fig. 3

Fig. 4a

Fig. 4b

Fig. 5a

Fig. 5b

| | | | Dauer in Millisekunden (1/1000s) | | |
|---|---|---|---|---|---|
| Versuch | Antrieb | Druck | öffnen | schließen | Schnellentlüftung |
| 1 | federkraftschließend | 5 | 41 | 33 | Kammer außen |
| 2 | federkraftschließend | 6 | | | Kammer außen |
| 3 | doppelwirkend | 6 | 21 | 21 | Kammer außen |
| 4 | doppelwirkend | 5 | 23 | 20 | Kammer außen |
| 5 | doppelwirkend | 5 | 27 | 20 | Kammer außen |
| 6 | doppelwirkend | 5 | 21 | 20 | Kammer außen |
| 7 | doppelwirkend | 4 | 27 | 24 | Kammer außen |
| 8 | doppelwirkend | 4 | 24 | 45 | Kammer innen |
| 9 | doppelwirkend | 5 | 20 | 39 | Kammer innen |
| 10 | doppelwirkend | 5 | 19 | 38 | Kammer innen |
| 11 | doppelwirkend | 5 | 20 | 43 | Kammer innen |
| 12 | doppelwirkend | 5 | 132 | 235 | Standardantrieb ohne Änderung |

Fig. 6

Fig. 7

AP - Qualität / Sorte:
1 = LWC - Papier
2 = Wellpappenpapiere ohne Kraftanteil
3 = Wellpappenpapiere mit Kraftanteil
4 = Beidseitig PE- beschichtetes Papier
5 = Getränkekarton

Energie in %
Zeit in %

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011083667 A1
- WO 2009149958 A1